(19) Europäisches Patentamt
European Patent Office
Office européen des brevets

(11) EP 4 782 484 A1

(12) EUROPEAN PATENT APPLICATION
published in accordance with Art. 153(4) EPC

(43) Date of publication:
**29.07.2026 Bulletin 2026/31**

(21) Application number: **24868212.2**

(22) Date of filing: **13.09.2024**

(51) International Patent Classification (IPC):
***C08J 5/18*** *(2006.01)* ***B32B 15/08*** *(2006.01)*
***B32B 15/085*** *(2006.01)* ***C08L 23/12*** *(2006.01)*
***C08L 53/00*** *(2006.01)* ***H01G 4/18*** *(2006.01)*
***H01G 4/32*** *(2006.01)*

(52) Cooperative Patent Classification (CPC):
**B32B 15/08; B32B 15/085; C08J 5/18; C08L 23/12; C08L 53/00; H01G 4/18; H01G 4/32**

(86) International application number:
**PCT/JP2024/032821**

(87) International publication number:
**WO 2025/063135 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.09.2023 JP 2023156684**
**27.02.2024 JP 2024027179**

(71) Applicant: **Toray Industries, Inc.**
**Tokyo 103-8666 (JP)**

(72) Inventors:
- **TATSUKI, Toshiumi**
**Otsu-shi, Shiga 520-8558 (JP)**
- **OHKURA, Masatoshi**
**Otsu-shi, Shiga 520-8558 (JP)**
- **FUJIWARA, Satoshi**
**Otsu-shi, Shiga 520-8558 (JP)**
- **OKADA, Kazuma**
**Otsu-shi, Shiga 520-8558 (JP)**
- **SHIMOKAWATOKO, Haruka**
**Otsu-shi, Shiga 520-8558 (JP)**

(74) Representative: **Mewburn Ellis LLP**
**Aurora Building**
**Counterslip**
**Bristol BS1 6BX (GB)**

# (54) BIAXIALLY ORIENTED POLYPROPYLENE FILM

(57) The present invention relates to a biaxially oriented polypropylene film containing a resin A having an alicyclic structure in a side chain. An object of the present invention is to provide a biaxially oriented polypropylene film that has excellent processability, can be used as a dielectric of a film capacitor in a high-temperature environment, and has excellent lifespan when used as a film capacitor.

EP 4 782 484 A1

## Description

TECHNICAL FIELD

The present invention particularly relates to a biaxially oriented polypropylene film suitably used for film capacitor applications.

BACKGROUND ART

Recently, inverters are introduced into most electric facilities, and it is increasingly required to reduce the size and increase the capacitance of film capacitors. In response to this demand, particularly in fields such as automobiles (including electric vehicles and hybrid cars), electric aircraft, solar power generation, and wind power generation, further thinning and improved heat resistance are being required for the film, which serves as the dielectric of the film capacitor, in addition to improvements in withstand voltage properties and productivity, and the maintenance of processability in the production of film capacitor elements.

In order to apply a film as the dielectric of a film capacitor in the above fields, it is important that the film possesses excellent heat resistance (such as dimensional stability) at the operating environmental temperature, and stable electrical performance (such as withstand voltage properties) in a temperature range that is 10°C to 20°C higher than the operating environmental temperature. Furthermore, considering future applications in power semiconductors using silicon carbide (SiC), it is said that the operating environmental temperature of film capacitors will become higher, and it is also presumed that the demand for heat resistance will further increase.

At present, among polyolefin-based films, polypropylene film, which is relatively excellent in heat resistance and withstand voltage properties, is used as the dielectric of film capacitors. However, as described in Non-Patent Document 1, the upper limit of the operating temperature of polypropylene film is said to be approximately 110°C. However, from the above circumstances, film capacitors are required to have further improved heat resistance and withstand voltage properties, and films for film capacitors are required to have an improved dielectric breakdown voltage in a high-temperature environment exceeding 110°C. That is, it has been extremely difficult for conventional polypropylene films to stably maintain withstand voltage properties under such temperature conditions.

In order to reduce the size of the film capacitor and improve the heat resistance, approaches such as thinning the film, using a film with a high dielectric constant, and using a film having a glass transition temperature exceeding the operating environmental temperature range of the film capacitor have been considered, and various attempts have been made.

For example, there has been proposed a laminate in which one layer is a cyclic olefin resin layer having a glass transition temperature exceeding 130°C, and the other layer is a polypropylene resin layer, and these layers are alternately laminated (for example, Patent Document 1). Such a laminate has a laminated structure in which two types of layers having different dielectric constants are alternately laminated, and therefore can maintain a large capacitance while having excellent heat resistance and withstand voltage properties.

Further, there has been proposed a film having processability improved by co-extrusion and co-stretching during formation of a laminate of the cyclic olefin resin and the polypropylene resin (for example, Patent Documents 2 and 3). Moreover, there has been proposed a film having thermal dimensional stability in a high-temperature environment improved by blending the cyclic olefin resin and a polypropylene resin, forming a film, and biaxially stretching the film (for example, Patent Document 4).

PRIOR ART DOCUMENTS

PATENT DOCUMENTS

Patent Document 1: Japanese Patent Laid-open Publication No. 2015-012076
Patent Document 2: International Publication No. 2017/022706
Patent Document 3: Japanese Patent Laid-open Publication No. 2018-034510
Patent Document 4: National Publication of International Patent Application No. 2020-521867

NON-PATENT DOCUMENT

Non-Patent Document 1: MOTONOBU KAWAI: "Film Capacitor Breakthrough, from Car to Energy", NIKKEI ELECTRONICS, Nikkei Business Publications, Inc., 17 September 2012, p. 57-62

## SUMMARY OF THE INVENTION

### PROBLEMS TO BE SOLVED BY THE INVENTION

However, the film of Patent Document 1 is not a laminate formed by co-extrusion, but a laminate in which a cyclic olefin resin layer is formed on a polypropylene film by a coating method. Therefore, the cyclic olefin resin layer is prone to peeling, and it is difficult to say that the processability in a high-temperature environment, and the performance and reliability when used as a film capacitor, cannot be said to be sufficient. The film of Patent Document 2 also has a laminated structure in which the base layer portion is composed of a single cyclic olefin resin. Therefore, it is difficult to increase the area stretching ratio, the withstand voltage properties in a high-temperature environment are insufficient and the like, and it is difficult to say that the performance and reliability when used as a film capacitor are sufficient. In the film of Patent Document 3, a base layer portion of a laminated structure is the cyclic olefin resin, and an elastomer is included to improve stretchability and increase an area stretching ratio thereof. However, the film is not satisfactory in the withstand voltage properties in the high-temperature environment, and it is also difficult to say that the performance and the reliability of the film as the film capacitor are sufficient. The film of Patent Document 4 is merely a film in which a cyclic olefin resin and a polypropylene resin are blended, and therefore it is difficult to increase the area stretching ratio during stretching. Therefore, for example, the withstand voltage properties in a high-temperature environment were insufficient, and it was difficult to say that the performance and reliability when used as a film capacitor were sufficient. In addition, by increasing the preheating temperature and stretching temperature during stretching in the width direction, stretching at a high area stretching ratio became possible. However, a film stretched at high temperatures exhibited a significant decrease in withstand voltage from room temperature to high temperatures, leading to the problem that its characteristics were unstable when used as a film capacitor. In addition, these films had problems that they were easily broken during production and processing, the yield was reduced, and the lifespan was shortened when used as a film capacitor for a long period of time.

Accordingly, the present invention has as its object to provide a biaxially oriented polypropylene film that has excellent processability, can be used as a dielectric of a film capacitor in a high-temperature environment, and has excellent lifespan when used as a film capacitor.

### SOLUTIONS TO THE PROBLEMS

The inventors of the present invention have carried out intensive studies for solving the problem mentioned above, and have arrived at the present invention. The present invention is a biaxially oriented polypropylene film containing a resin A having an alicyclic structure in a side chain.

### EFFECTS OF THE INVENTION

According to the present invention, it is possible to provide a biaxially oriented polypropylene film that has excellent processability, can be used as a dielectric of a film capacitor in a high-temperature environment, and has an excellent lifespan when used as a film capacitor.

## EMBODIMENTS OF THE INVENTION

The present inventors conducted extensive investigations to solve the above-described problems, and considered the reasons for the films described in Patent Documents 1 to 4 being prone to breakage during processing, leading to a reduction in yield, or causing a shortened lifespan of the film capacitor when used as a dielectric over a long period, as follows.

In the films of Patent Documents 1 to 4, in order to improve withstand voltage at high temperatures, a cyclic olefin resin (hereinafter referred to as COP) having a cyclic olefin in the main chain is included. Generally, COP is highly brittle and has low impact resistance, and therefore it was considered that in these films, the COP portion becomes the starting point of breakage during processing, or dielectric breakdown progresses from sites of delamination caused by impact, leading to a shortened lifespan.

In addition, the films of the above patent documents aim to improve heat resistance by subjecting a polypropylene resin containing COP to stretching. However, the dispersibility of COP in the polypropylene resin and the deformation followability of COP domains during stretching may be insufficient. As a result, the stretchability of the unstretched film decreases, and, because the molecular chains of the polypropylene resin relax when the temperature rises momentarily, it was considered that when the obtained film is used as a dielectric of a film capacitor, the equivalent series resistance increases, leading to a shortened lifespan of the film capacitor.

Based on the above consideration, the present inventors have further studied, and have invented a biaxially

oriented polypropylene film that solves the above problems. The biaxially oriented polypropylene film of the present invention is a biaxially oriented polypropylene film containing a resin A having an alicyclic structure in a side chain. Hereinafter, the biaxially oriented polypropylene film of the present invention will be specifically described. Note that the biaxially oriented polypropylene film may hereinafter be simply referred to as "film". Note that, in a case where upper limits and lower limits of preferable ranges below are described separately, the limits can be combined in any manner.

In the present invention, biaxial orientation means that molecules are oriented in two directions orthogonal to each other in a film surface, and this can be realized by stretching an unstretched film in two directions orthogonal to each other (for example, a longitudinal direction and a width direction). The longitudinal direction refers to a direction in which the film travels during a production step (in a film roll, a winding direction of a film corresponds thereto), and the width direction refers to a direction orthogonal to the longitudinal direction in a film surface.

In addition, since the biaxially oriented polypropylene film of the present invention is not a microporous film, it does not have a large number of pores. In other words, the biaxially oriented polypropylene film of the present invention means a biaxially oriented polypropylene film other than the microporous film. Here, the microporous film is defined as a film having a pore structure penetrating both surfaces of the film and having air permeability to the extent that the permeation time of 100ml of air measured at a temperature of 23°C and a relative humidity of 65% by a B-type Gurley tester of JIS P 8117(1998) is 5,000 seconds/100ml or less.

Here, the biaxially oriented polypropylene film refers to a biaxially oriented sheet-shaped molded body containing the polypropylene resin as a main component, and the main component refers to a component contained in an amount of more than 50 mass% and 100 mass% or less in a case where a total amount of components constituting the film is 100 mass%. Note that, in a case where the film contains a plurality of types of components corresponding to the polypropylene resin, when the total amount of these components exceeds 50 mass%, the film contains the polypropylene resin as the main component even when an amount of each of the components is less than 50 mass%.

The polypropylene resin refers to a resin containing a propylene unit in an amount of more than 50 mol% and 100 mol% or less in a case where a total amount of constituent units constituting the resin is 100 mol%, and does not correspond to the "resin A having an alicyclic structure in a side chain" described later.

The biaxially oriented polypropylene film of the present invention contains a resin A having an alicyclic structure in a side chain (hereinafter, the "resin A having an alicyclic structure in a side chain" may be referred to as "resin A"). Here, the resin A refers to a resin containing a total of 0.1 mol% or more and 100 mol% or less of the constituent units 1 to 4 represented by the following chemical formula when the total amount of constituent units constituting the resin is 100 mol%. Note that the above constituent units contained in the molecular chain of the resin A may be any of 1 to 4 types. In addition, the constituent unit refers to the smallest structural unit having 2 or more carbon atoms contained in the molecular chain of the resin. For example, in the case of polyethylene, the constituent unit is one in which R1 to R2 of constituent unit 6 are H, in the case of cyclohexylethylene-ethylene-butylene-cyclohexylethylene copolymer synthesized by hydrogenating a styrene-butylene-styrene copolymer, the constituent units are one in which R1 to R6 of constituent unit 1 are H, one in which R1 to R2 of constituent unit 6 are H, and one in which R1 of constituent unit 6 is H and R2 is an ethyl group, and in the case of polyethylene glycol, $(C_2H_4O)$ is the constituent unit.

[Chemical Formula 1]

Constituent unit 1

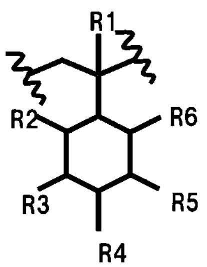

Constituent unit 2

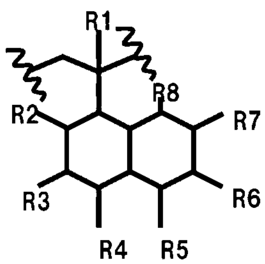

Constituent unit 3

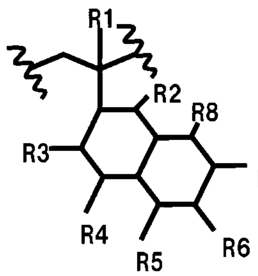

Constituent unit 4

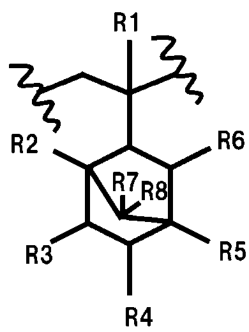

Other constituent units constituting the resin A are optional, and examples thereof include constituent units 5 and 6 represented by the following chemical formulas.

[Chemical Formula 2]

Constituent unit 5

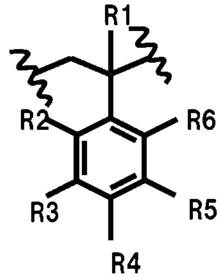

Constituent unit 6

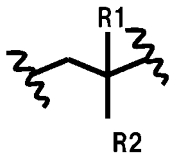

In the constituent units 1 to 6, R1 to R8 represent H or any substituent, and may be, for example, H, an alkyl group, a halogen group, a nitro group, a sulfonyl group, an amide group, a carbonyl group, or a carboxyl group. Note that R1 to R8 may be all different, or two or more may overlap. Note that the wavy line in the constituent units 1 to 6 means omission of the subsequent chemical structure.

However, R1 is preferably H or a methyl group from the viewpoint of increasing the degree of polymerization when producing the resin A. Also, from the viewpoint of enhancing dispersibility in a polypropylene resin, it is preferable that R2 to R8 are H, linear alkyl groups having 1 to 30 carbon atoms such as a methyl group or an ethyl group, or an isopropyl group, an isobutyl group, a sec-butyl group, and the like.

In the biaxially oriented polypropylene film of the present invention, the glass transition temperature of the resin A can be adjusted to adjust the heat resistance by adjusting the molecular structure of the resin A. For example, the glass transition temperature of the resin A can be increased by increasing the ratio of the constituent units 1 to 4 in the resin A or decreasing the ratio of the constituent unit 6. In addition, the heat resistance of the biaxially oriented polypropylene film can be adjusted by adjusting the content of the resin A or by mixing a plurality of types of resins A. Specifically, the heat resistance of the biaxially oriented polypropylene film can be enhanced by increasing the content of the resin A, or by mixing the resin A having a high ratio of the constituent units 1 to 4 with the resin A having a high ratio of the constituent units 6 to increase the mixing ratio of the former.

On the other hand, from the viewpoint of the film formability of the biaxially oriented polypropylene film, particularly the ease of stretching, it is preferable to reduce the ratio of the constituent units 1 to 4 in the resin A, to reduce the content of the resin A, and to reduce the ratio of the resin A having a high ratio of the constituent units 1 to 4 when a plurality of resins A are used. That is, the heat resistance and the film formability of the biaxially oriented polypropylene film generally have a trade-off relationship, and from the viewpoint of achieving both, it is preferable to appropriately adjust the ratio of the constituent units 1 to 4 in the resin A, the content of the resin A, and the ratio of the resin A having a high ratio of the constituent units 1 to 4 in the case of using a plurality of resins A.

The alicyclic structure contained in the side chain of the constituent units 1 to 4 not only increases the glass transition temperature to improve the heat resistance, but also contributes to increasing the affinity with polypropylene. In addition, when the main chain rather than the side chain has such an alicyclic structure, the flexibility of the molecular chain is lowered, and the stability and stretchability at the time of molding are reduced. On the other hand, when the side chain has an alicyclic structure, a decrease in flexibility of the molecular chain is suppressed, and both the stability and stretchability during molding and a high glass transition temperature (heat resistance) can be achieved. That is, in the biaxially oriented polypropylene film of the present invention, it is important to contain a resin (resin A) having an alicyclic structure in the side chain in order to obtain the effect of the invention.

Among the resins A, those containing the constituent unit 1 are preferable, in that the synthesis method is industrially established and high-quality raw materials can be procured, and they can be synthesized by hydrogenating styrenic polymers. Note that the term "styrenic polymer" refers to a polymer obtained by polymerizing styrene as one of the monomers, and examples thereof include styrene-ethylene-butylene copolymer, styrene-ethylene copolymer, styrene-ethylene-propylene copolymer, styrene-butylene copolymer, styrene-ethylene-butylene-styrene copolymer, styrene-ethylene-styrene copolymer, styrene-butylene-styrene copolymer, styrene-propylene-styrene copolymer, and polystyrene.

Specific examples of the resin A that can be industrially used suitably for the biaxially oriented polypropylene film of the present invention include hydrogenated products of polystyrene and hydrogenated products of styrene-$\alpha$-olefin copolymers and the like. In particular, from the viewpoint of suppressing interfacial peeling in polypropylene and increasing dispersibility to increase the storage elastic modulus in the main orientation axis direction described later, it is preferable to use a copolymer having at least one residue of ethylene or $\alpha$-olefin and a vinylcyclohexane residue as the resin A, and it is more preferable to use a polymer synthesized by hydrogenating an unsaturated bond derived from styrene and $\alpha$-olefin in

a copolymer of styrene-α-olefin. In addition, from the viewpoint of further enhancing the heat resistance, it is preferable to use polyvinylcyclohexane obtained by hydrogenating polystyrene. As examples of polyvinylcyclohexane, there are known crystalline isotactic polyvinylcyclohexane obtained by hydrogenating isotactic polystyrene, crystalline syndiotactic polyvinylcyclohexane obtained by hydrogenating syndiotactic polystyrene, and amorphous atactic polyvinylcyclohexane obtained by hydrogenating atactic polystyrene, and there have been reported cases in which crystalline isotactic polyvinylcyclohexane is added with the expectation of acting as a nucleating agent for polypropylene (Japanese Patent No. 6592192, Japanese Patent No. 2075499, Macromolecules 2006, 39, 2832-2840).

In the present invention, it is preferable to use amorphous atactic polyvinylcyclohexane from the viewpoint of securing stability and stretchability during molding, increasing the film withstand voltage by stretching not to form insulation defects, and increasing the lifespan. Note that, as described in the above-mentioned academic documents and known documents, isotactic polyvinylcyclohexane and syndiotactic polyvinylcyclohexane have a melting point higher than 300°C, and when it is attempted to contain a suitable content (described later) capable of enhancing the effect of the present invention, coextrudability and moldability with polypropylene may significantly deteriorate, and these resins are not preferable from the viewpoint of economic efficiency and the viewpoint of obtaining the effect of the invention. In addition, from the viewpoint of enhancing molding processability, it is preferable that the resin A used in the present invention has a feature that when mixed with a predetermined polypropylene, a crystallization temperature (Tmc) in a temperature lowering process of the polypropylene measured by differential scanning calorimetry is 115°C or less, and the resin A does not substantially have a nucleating agent action. Note that Tmc can be measured in accordance with JIS K7121-1987, and the details thereof will be described later.

Examples of commercially available products industrially usable as the resin A include "ViviOn" (registered trademark) series (1325, MDP-0011, and the like) of USI, "Tefablock" (registered trademark) of Mitsubishi Chemical Corporation, and the like. The "ViviOn" (registered trademark) series includes a copolymer containing a constituent unit 1 in which R1 to R6 are all H, a constituent unit 6 in which R1 is H and R2 is an ethyl group, and a homopolymer of the constituent unit 1 in which R1 to R6 are all H, and any of them can be suitably used as described above.

The biaxially oriented polypropylene film of the present invention contains a polypropylene resin as a main component, and the layer configuration is not particularly limited as long as the layer configuration contains the resin A, but from the viewpoint of achieving both stretchability and heat resistance, it is preferable to have at least one layer containing both the polypropylene resin and the resin A. In general, a polypropylene resin is superior in stretchability to the resin A, but is inferior in heat resistance. Therefore, by having a layer containing both the polypropylene resin and the resin A, a biaxially oriented polypropylene film excellent in stretchability and heat resistance can be obtained.

From the viewpoint of improving the lifespan of the film capacitor when the polyolefin film of the present invention is used as a dielectric of the film capacitor, the storage elastic modulus E' in the main orientation axis direction at 145°C is preferably $1.0 \times 10^8$ Pa or more and $1.0 \times 10^{13}$ Pa or less (hereinafter, the storage elastic modulus E' in the main orientation axis direction at 145°C may be simply referred to as "storage elastic modulus E'"). Note that the storage elastic modulus E' can be measured by a dynamic viscoelasticity method, and details of the measurement method will be described later.

By setting the storage elastic modulus E' to the lower limit of the above range or more, the biaxially oriented polypropylene film of the present invention can suppress an increase in equivalent series resistance when the temperature rises momentarily. Therefore, when such a biaxially oriented polypropylene film is used as a dielectric of a film capacitor, the lifespan of the film capacitor is improved. From the above viewpoint, the storage elastic modulus E' in the biaxially oriented polypropylene film of the present invention is more preferably $1.2 \times 10^8$ Pa or more, still more preferably $5.0 \times 10^8$ Pa or more, and particularly preferably $5.5 \times 10^8$ Pa or more. Note that, from the above viewpoint, the storage elastic modulus E' of the biaxially oriented polypropylene film of the present invention is preferably as high as possible, but is preferably $1.0 \times 10^{13}$ Pa or less, more preferably $5.0 \times 10^{10}$ Pa or less from the viewpoint of feasibility.

As a method for adjusting the storage elastic modulus of the biaxially oriented polypropylene film of the present invention to $1.0 \times 10^8$ Pa or more and $1.0 \times 10^{13}$ Pa or less or the above preferable range, for example, it is effective to perform biaxial stretching on an unstretched polypropylene film containing the resin A, and to contain, as the resin A, a resin having a glass transition temperature of 140°C or higher in a suitable amount range to be described later. Note that, when a plurality of types of resins A are mixed and used to have a glass transition temperature of 140°C or higher, the storage elastic modulus E' can be easily adjusted by setting the total content of the added resins A to satisfy a suitable amount to be described later. The stretching conditions are not particularly limited, but it is preferable to perform biaxial stretching such that the area stretching ratio is 35 times or more, preferably 40 times or more, more preferably 42 times or more, more preferably 50 times or more, and particularly preferably 55 times or more in the range of the glass transition temperature of the resin A +3°C to the glass transition temperature of the resin A +50°C.

Hereinafter, the main orientation axis direction in the biaxially oriented polypropylene film of the present invention will be described. The main orientation axis direction refers to a direction in which the molecular chain orientation of the polypropylene resin is the largest in the film surface. In a case where the biaxial stretching is performed in the production of the biaxially oriented polypropylene film, the stretching is usually performed in the longitudinal direction and the width

direction, but in general, a direction where the stretching ratio is larger is a main orientation axis direction. In a case where stretching directions (the longitudinal direction and the width direction) are specified but the stretching ratios are unknown, it is possible to measure a maximum load of the film until the rupture in a tensile test at 23°C to be described later, and define a direction where a measured value of the maximum load is larger as the main orientation axis direction.

As described above, when the stretching directions and the stretching ratios are known, the main orientation axis direction can be easily specified, but in the case of a film for which these are unknown, the main orientation axis direction can be specified by the following method. Specifically, the sample <1> is cut into a rectangle having a length of 50 mm × a width of 10 mm, and the direction of the long side of the sample <1> is defined as 0°. Next, a rectangular sample <2> having the same size is collected such that the long side direction is a direction rotated rightward by 15° from the 0° direction, and thereafter, the long side direction of the rectangular sample is similarly rotated by 15° to collect rectangular samples <3> to <12>. Next, each of the samples in the rectangular shape is set in a tensile tester at an initial chuck-to-chuck distance of 20 mm such that the long side direction is a tensile direction (measurement direction), and a tensile test is performed at a tensile speed of 300 mm/min in an atmosphere at 23°C. In this case, a maximum load until each of the samples is ruptured is read, and a value obtained by dividing the maximum load by a cross-sectional area (film thickness × width) of each of the samples before the test is calculated as a stress of a maximum point strength. The long side direction of the sample having a maximum value is defined as a main orientation axis direction of the biaxially oriented polypropylene film, and a direction orthogonal thereto within the film surface is defined as a direction orthogonal to the main orientation axis of the biaxially oriented polypropylene film.

In a case where the width of the sample is less than 50 mm and the above tensile test cannot be performed, the crystal orientation of the α-crystal (110) plane by wide-angle X-ray can be measured as follows, and the main orientation axis direction can be determined based on the following evaluation criteria. In other words, an X-ray (CuKα ray) is incident in a direction orthogonal to a film surface, and a crystal peak at 2θ = about 14° (α crystal (110) plane) is scanned in a circumferential direction, and it is also possible to define a direction where the diffraction intensity of the obtained diffraction intensity distribution is the highest as the main orientation axis direction, and a direction orthogonal thereto within the film surface can be defined as a direction orthogonal to the main orientation axis direction.

In the biaxially oriented polypropylene film of the present invention, the resin A is preferably amorphous. By using an amorphous resin, it is easy to enhance stretchability and to suppress a decrease in the lifespan of the film capacitor due to generation of insulation defects during stretching. Note that the amorphous state of the resin A can be confirmed by a general measurement method such as a powder X-ray diffraction method. For example, in the case of polyvinylcyclohexane, since crystalline polyvinylcyclohexane has a peak in the range of 2θ = 5° to 20° by the powder X-ray diffraction method, it can be confirmed that the polyvinylcyclohexane is amorphous since there is no peak in this region.

The thickness of the biaxially oriented polypropylene film of the present invention can be appropriately adjusted according to the application, but is preferably 0.5 μm or more and 60 μm or less from the viewpoint of biaxially orienting the film to improve the heat resistance. From the same viewpoint, the upper limit of the thickness of the biaxially oriented polypropylene film is more preferably 40 μm and still more preferably 30 μm.

In addition, when a biaxially oriented polypropylene film is used as a dielectric of a film capacitor, the thickness thereof is preferably 10 μm or less, more preferably 6.0 μm or less, still more preferably 3.5 μm or less, and particularly preferably 3.0 μm or less from the viewpoint of reducing the size of the film capacitor. The thickness of the biaxially oriented polypropylene film is preferably 1.0 μm or more, and more preferably 1.5 μm or more from the viewpoint of suppressing film breakage during film formation. By setting the thickness of the biaxially oriented polypropylene film to 10 μm or less, the heat resistance improving effect by the resin A can be further increased, the withstand voltage properties in a high-temperature environment can be improved, and the size of the film capacitor element can be reduced. Note that the thickness of the biaxially oriented polypropylene film can be measured with a known electronic micrometer, and details thereof will be described later.

The thickness of the biaxially oriented polypropylene film can be adjusted by a known method. Specifically, the thickness of the biaxially oriented polypropylene film can be reduced by reducing the lip gap of the die, reducing the discharge amount of the molten resin from the extruder, increasing the rotation speed of the casting drum, increasing the stretching ratio, and the like. Note that these methods may be used appropriately in combination.

The biaxially oriented polypropylene film of the present invention preferably has a thermal shrinkage rate at 135°C in the main orientation axis direction of -10% or more and 5.0% or less. By adjusting the thermal shrinkage rate at 135°C in the main orientation axis direction within the above range, dimensional stability can be enhanced when the film is used as a dielectric of a film capacitor in a high-temperature environment. From the above viewpoint, the thermal shrinkage rate is more preferably 2.5% or less, and still more preferably 1.2% or less. In order to secure insulation from peripheral components, a film capacitor is generally used in a form in which an exterior resin is filled around a component including a wound body of a film serving as a dielectric and an electrode.

By adjusting the thermal shrinkage rate of the biaxially oriented polypropylene film of the present invention within the above range to enhance the dimensional stability of the film capacitor, it is possible to reduce the risk that the film capacitor peels off from the resin or the film capacitor itself is deformed and broken when used as described above.

The thermal shrinkage rate at 135°C in the main orientation axis direction can be calculated from the lengths in the main orientation axis direction before and after heating the biaxially oriented polypropylene film for 10 minutes in an oven maintained at 135°C, and the detailed measurement method thereof will be described later.

Examples of the method of setting the thermal shrinkage rate at 135°C in the main orientation axis direction to -10% or more and 5.0% or less or the above preferable range include a method of setting the heat treatment temperature to a value not less than the glass transition temperature of the resin A and setting the relaxation treatment rate to be described later to 10% or more and the like.

In the biaxially oriented polypropylene film of the present invention, the length in the thickness direction of the domain in a cross section in the main orientation axis direction-thickness direction is preferably 0.0010 μm or more and 1.0 μm or less. Here, the cross section in the main orientation axis direction-thickness direction refers to a cross section obtained by cutting the biaxially oriented polypropylene film along a plane parallel to the main orientation axis direction and perpendicular to the film surface. Note that, hereinafter, "the length of the domain in the thickness direction in the cross section in the main orientation axis direction-thickness direction" may be referred to as "the length of the domain in the thickness direction".

By adjusting the length of the domain in the thickness direction within the above range, it is possible to suppress the domain from being an insulation defect and to increase the lifespan of the film capacitor when the biaxially oriented polypropylene film is used as a dielectric of the film capacitor. From the viewpoint mentioned above, the length of the domain in the thickness direction is preferably 0.50 μm or less, more preferably 0.20 μm or less, and still more preferably 0.10 μm or less. From the above viewpoint, the length of the domain in the thickness direction is preferably as short as possible, but from the viewpoint of feasibility, the length is preferably 0.0010 μm or more, and more preferably 0.0050 μm or more.

The length of the domain in the thickness direction can be measured by cutting the biaxially oriented polypropylene film by a microtome method to obtain an ultrathin section having a cross section in the main orientation axis direction-thickness direction, and observing the ultrathin section with a transmission electron microscope (TEM) and analyzing the image. The detailed measurement method will be described later.

Examples of the method for setting the length of the domain in the thickness direction to 0.0010 μm or more and 1.0 μm or less or within the above-mentioned preferable range include a method of using a resin having the above-mentioned preferable structure as the resin A having a cyclic structure in the side chain, a method of stretching at a high draw ratio and preliminarily compounding resin A having a cyclic structure in the side chain and polypropylene (preliminary kneading), and a method of reducing the extrusion temperature to increase the shear in the extruder. These methods can be appropriately combined, and in particular, from the viewpoint of enhancing the production stability, it is preferable to use a resin having the above-described preferable structure as the resin A having a cyclic structure in the side chain.

The biaxially oriented polypropylene film of the present invention preferably has an internal haze of 0.0% or more and 5.0% or less. By keeping the internal haze within this range, the biaxially oriented polypropylene film is less likely to undergo dielectric breakdown, and the lifespan of the film capacitor can be increased when used as a dielectric of the film capacitor. From the above viewpoint, the internal haze of the biaxially oriented polypropylene film is more preferably 2.0% or less. The lower limit of the internal haze of the biaxially oriented polypropylene film is theoretically 0.0%, but is preferably 0.4% and more preferably 0.6% in consideration of enhancing the lifespan improving effect as a film capacitor brought about by the improvement in heat resistance by the resin A. Note that the internal haze of the biaxially oriented polypropylene film can be measured by a known haze meter, and details of the measurement method will be described later.

As a method for setting the internal haze of the biaxially oriented polypropylene film to 0.0% or more and 5.0% or less or within the above preferable range, it is effective to set the glass transition temperature of the resin A to be used to 165°C or less, and preferably 160°C or less to secure sufficient fluidity during stretching and to perform stretching at a temperature higher than the glass transition temperature of the resin A. Note that, the glass transition temperature of the resin A can be increased, for example, by increasing the ratio of the above-mentioned constituent units 1 to 4 in the constituent unit of the resin A, and can be decreased by increasing the ratio of the above-mentioned constituent unit 6. The internal haze of the biaxially oriented polypropylene film can also be reduced by reducing the amount of the resin A.

In the biaxially oriented polypropylene film of the present invention, the glass transition temperature of at least one resin A is preferably 120°C or higher and 160°C or lower. By adopting such an aspect, followability to the polypropylene resin can be enhanced during molding processing, and it is easy to suppress a decrease in adhesion between the resin A and the polypropylene resin, which leads to a decrease in impact strength. As a result, in the film capacitor using such a biaxially oriented polypropylene film, reliability is improved, and a decrease in equivalent series resistance when the temperature rises momentarily is suppressed, and thus the lifespan is improved.

From the viewpoint of increasing the temperature that can be used as a film capacitor, the biaxially oriented polypropylene film more preferably contains the resin A having a glass transition temperature of 127°C or higher, still more preferably contains the resin A having a glass transition temperature of 137°C or higher, and particularly preferably contains the resin A having a glass transition temperature of 143°C or higher.

In general, when the cyclic olefin resin has a glass transition temperature of 143°C or higher, stretchability is significantly reduced when the cyclic olefin resin is dispersed in polypropylene, and it becomes difficult to achieve both productivity and heat resistance to the extent that the cyclic olefin resin can be used as a dielectric of a film capacitor in a high-temperature environment. In the biaxially oriented polypropylene film of the present invention, by using the resin A as a resin excellent in heat resistance, stretchability can be maintained even when the glass transition temperature is higher than 143°C, and both heat resistance and productivity to the extent that the film can be used as a dielectric of a film capacitor in a high-temperature environment can be achieved. Meanwhile, from a viewpoint of molding processability, the glass transition temperature of the resin A is more preferably 160°C or less, and still more preferably 150°C or less.

In addition, it is preferable to contain two or more types of the resin A from the viewpoint of achieving both film formability and heat resistance, and it is more preferable to contain both the resin A having a glass transition temperature of 140°C or higher and the resin A having a glass transition temperature of lower than 140°C since the effect of increasing the heat resistance by the former and the effect of improving the film formability by the latter are obtained. Here, the phrase "containing two or more types of the resin A" means that, when the components corresponding to the resin A are separated into groups of two or more components by a known method such as liquid chromatography or reprecipitation, the molar fraction of each constituent unit is determined for each group when the total constituent units of the components corresponding to the resin A are 100 mol%, and the molar fractions of the constituent units are compared between the groups, there is at least one group in which the molar fraction of at least one constituent unit differs by 5 mol% or more between the groups. In addition, when it is difficult to measure the molar fraction, the glass transition temperature of the resin is measured after the resin is separated into groups as described above, and a case where the glass transition temperature of the component corresponding to the resin A is different by 5°C or more can also be regarded as including two or more types of the resin A.

In the present invention, the glass transition temperature of the resin can be measured according to JIS K7121-1987 as follows. By using a differential scanning calorimeter, 3 mg of the resin in a nitrogen atmosphere is heated from 30°C to 260°C under a condition of 20°C/min, then kept at 260°C for 5 minutes, and then cooled to 30°C under the condition of 20°C/min. Further, after holding at 20°C for 5 minutes, reheating is performed by raising the temperature from 30°C to 260°C at a rate of 20°C/min. From a DSC curve obtained in the reheating process, the glass transition temperature (Tg) is calculated according to the following formula. Note that a differential scanning calorimeter is not particularly limited as long as the measurement is possible, and a publicly known differential scanning calorimeter can be used. For example, EXSTAR DSC6220 manufactured by Seiko Instruments Inc. or the like can be used.

Glass transition temperature = (Extrapolated glass transition starting temperature + Extrapolated glass transition end temperature)/2.

The biaxially oriented polypropylene film of the present invention preferably contains 0.2 mass% or more and 45 mass% or less of the resin A based on the 100 mass% of the entire biaxially stretched polypropylene film from the viewpoint of achieving both film formability and withstand voltage characteristics in a high-temperature environment. Note that, when a plurality of types of resin A are contained, the content of resin A is calculated by summing the contents of all the types of resin A.

In the biaxially oriented polypropylene film of the present invention, by setting the content of the resin A to 45 mass% or less, stability during molding and stretchability can be enhanced. From the above viewpoint, the content of the resin A is more preferably 30 mass% or less, and still more preferably 25 mass% or less. On the other hand, by setting the content of the resin A to 0.2 mass% or more, heat resistance when used as a film capacitor can be enhanced.

From the above viewpoint, the content of the resin A in the biaxially oriented polypropylene film is more preferably 0.5 mass% or more, still more preferably 1.2 mass% or more, particularly preferably 5.0 mass% or more, very preferably 10 mass% or more, and extremely preferably 15 mass% or more.

That is, by setting the content of the resin A in the biaxially oriented polypropylene film to 0.2 mass% or more and 45 mass% or less, and further to the above preferred range, the withstand voltage in a high-temperature environment can be increased, and it becomes easy to obtain a biaxially oriented polypropylene film that can be used as a dielectric of a film capacitor having a higher rated voltage.

In addition, the content of the resin A is preferably less than 10 mass%, and more preferably less than 3.0 mass% from the viewpoint of reducing the region where the withstand voltage of the film is partially low, and making it possible to produce a small film capacitor with a small decrease in capacitance during use. Since there is a trade-off relationship with the heat resistance described above, the content of the resin A is preferably 0.2 mass% or more, more preferably 0.5 mass% or more, and particularly preferably 1.2 mass% or more, that is, most preferably 1.2 mass% or more and less than 3.0 mass% in order to produce a small film capacitor while enhancing the heat resistance. Furthermore, the storage elastic modulus E' of the film in the main orientation axis direction at 145°C is preferably $1.0 \times 10^8$ Pa or more, and more preferably $5.0 \times 10^8$ Pa or more, with the content of the resin A set to these preferable ranges. Examples of the method of controlling

the storage elastic modulus to fall within the above-mentioned preferable range after setting the content of the resin A to fall within the above-mentioned range include a method of using a polypropylene resin having high stereoregularity such that the mesopentad fraction is 0.973 or more, and a method of stretching such that the area stretching ratio is preferably 55 times or more, and more preferably 60 times or more.

The biaxially oriented polypropylene film of the present invention may contain various additives, for example, organic particles, inorganic particles, a crystal nucleating agent, an antioxidant, a heat stabilizer, a chlorine scavenger, a sliding agent, an antistatic agent, an anti-blocking agent, a filler, a viscosity modifier, and a coloring inhibitor as long as the object of the present invention is not impaired. Note that these additives may be used alone or in combination. Furthermore, when the biaxially oriented polypropylene film has a laminated structure, the additives may be contained in any of the layers.

In a case where the antioxidant is contained among the additives, selection of a type and an addition amount of the antioxidant is important from a viewpoint of long-term heat resistance. In other words, such antioxidant is preferably a phenol-based antioxidant having steric hindrance, and at least one of the antioxidants is preferably a high molecular weight type, which has a molecular weight of 500 or more. Specific examples thereof can be given. For example, it is preferable to use 2,6-dit-butyl-p-cresol (BHT: molecular weight of 220.4) in combination with 1,3,5-trimethyl-2,4,6-tris(3,5-di-t-butyl-4-hydroxybenzyl)benzene (for example, "Irganox" (registered trademark) 1330: molecular weight of 775.2, manufactured by BASF) or tetrakis[methylene-3(3,5-di-t-butyl-4-hydroxyphenyl)propionate]methane (for example, "Irganox" (registered trademark) 1010: molecular weight of 1,177.7, manufactured by BASF) and the like.

The total content of the high-molecular-weight type antioxidants having molecular weights of 500 or more is preferably in a range of 0.1 to 1.0 parts by mass with respect to 100 parts by mass of the total amount of the resin. When the amount of antioxidant is too small, long-term heat resistance may be insufficient, whereas when the amount of antioxidant is too large, blocking at high temperatures due to bleed-out of these antioxidants may adversely affect the film capacitor element. From the above viewpoints, the content of the antioxidant is more preferably 0.2 to 0.7 parts by mass, and still more preferably 0.3 to 0.5 parts by mass relative to 100 parts by mass of the total amount of the resin. When the biaxially oriented polypropylene film has a laminated structure of two or more layers, it is preferable that the amount of the high-molecular-weight type antioxidant having a molecular weight of 500 or more is 0.3 to 0.5 parts by mass in each layer from the viewpoint of suppressing defects such as fish eyes and improving quality and withstand voltage performance.

The biaxially oriented polypropylene film of the present invention may contain a resin other than the polypropylene resin and the resin A as long as the object of the present invention is not impaired. Specific examples of resins that can be contained in the biaxially oriented polypropylene film include, for example, vinyl polymer resins containing various polyolefin-based resins, polyester-based resins, polyamide-based resins, polyphenylene sulfide-based resins, polyimide-based resins, and polycarbonate-based resins. Particularly preferable examples thereof include polymethylpentene and syndiotactic polystyrene.

The content of these resins is preferably 3 mass% or less, more preferably 2 mass% or less, and still more preferably 1 mass% or less, in a case where the total content of the resin components constituting the biaxially oriented polypropylene film is 100 mass%. By keeping the content of the resin other than the polypropylene resin at 3% by mass or less, the influence of the domain interface can be suppressed, and the decrease in dielectric breakdown voltage in a high-temperature environment can be reduced.

The biaxially oriented polypropylene film of the present invention can be preferably used as a dielectric of a film capacitor. Here, the type of the film capacitor is not limited, and specifically, from a viewpoint of electrode configuration, the film capacitor may be either a film capacitor obtained by winding a metal foil and the film together or a metal vapor-deposited film capacitor, and the biaxially oriented polypropylene film is also preferably used in an oil-impregnated film capacitor impregnated with an insulating oil or a dry capacitor that does not use the insulating oil at all. However, from the characteristics of the biaxially oriented polypropylene film of the present invention, the polypropylene film is particularly preferably used in a metal vapor-deposited film capacitor. From the viewpoint of the shape, it may be a wound type or a laminated type (the film capacitor of the present invention will be described later.).

Since the biaxially oriented polypropylene film usually has low surface energy and it is difficult to stably perform metal vapor deposition, it is preferable to perform a surface treatment before the vapor deposition for the purpose of improving adhesion to a metal film. Specific examples of the surface treatment include a corona discharge treatment, a plasma treatment, a glow treatment, and a flame treatment.

The biaxially oriented polypropylene film of the present invention can be obtained by obtaining a polypropylene resin sheet using a resin composition containing a polypropylene resin as a main component and containing the resin A, and subjecting the polypropylene resin sheet to biaxial stretching, heat treatment, and relaxation treatment. As a method of the biaxial stretching, any of an inflation simultaneous biaxial stretching method, a tenter simultaneous biaxial stretching method, and a tenter sequential biaxial stretching method may be employed, and among them, a tenter sequential biaxial stretching method or a tenter simultaneous biaxial stretching method is preferably employed in terms of controlling the film formation stability, a crystalline/amorphous structure, and the surface properties, particularly the mechanical properties and thermal dimensional stability while increasing the stretching ratio of the present invention. Furthermore, from the

viewpoint of setting the storage elastic modulus at 145°C of the biaxially oriented polypropylene film of the present invention to the above preferred range, it is more preferable to employ a tenter sequential biaxial stretching method.

Next, a preferable method for producing the biaxially oriented polypropylene film of the present invention will be described. The biaxially oriented polypropylene film of the present invention can be produced through a casting step of melt-extruding a resin composition containing the polypropylene resin and the resin A onto a support to form a polypropylene resin sheet, and a stretching step of stretching the polypropylene resin sheet in the longitudinal direction and the width direction in this order. It should be noted that having the casting step and the stretching step in this order means that the casting step and the stretching step are present in this sequence, regardless of whether there are other steps upstream of the casting step, between the casting step and the stretching step, or downstream of the stretching step.

The production method includes a casting step of melt-extruding a resin composition containing the polypropylene resin and the resin A onto a support to form a polypropylene resin sheet. The resin composition containing the polypropylene resin and the resin A is not particularly limited as long as the resin composition contains the polypropylene resin as a main component and the resin A, but it is preferable to use a compound resin composition obtained by preliminarily kneading both in order to enhance the dispersibility of the resin A. The support is not particularly limited as long as a polypropylene resin sheet can be obtained by cooling and solidifying the resin composition melt-extruded into a sheet shape, and for example, a cooling drum (casting drum) or the like can be used.

In the production method, there is a stretching step of stretching the polypropylene resin sheet in the longitudinal direction and the width direction downstream of the casting step. "Stretching in the longitudinal direction and the width direction" includes both of a sequential biaxial stretching method in which stretching is performed in the longitudinal direction and then stretching is performed in the width direction and a simultaneous biaxial stretching method in which stretching is performed simultaneously in the longitudinal direction and the width direction, but the sequential biaxial stretching method is preferable from the viewpoint of individually and preferably controlling temperature conditions in stretching in the longitudinal direction and stretching in the width direction.

Hereinafter, the method for producing the biaxially oriented polypropylene film of the present invention will be described more specifically. However, the biaxially oriented polypropylene film of the present invention is not limited to those obtained by the following method.

First, in producing the biaxially oriented polypropylene film of the present invention, it is preferable to compound the resin A, the polypropylene resin, and the antioxidant in advance from the viewpoint of improving the dispersion state of the resin A and the polypropylene resin and increasing the dielectric breakdown voltage of the obtained biaxially oriented polypropylene film at high temperatures.

For the compounding, a single-screw extruder, a twin-screw extruder, or the like can be used, but from viewpoints of a good dispersion state, it is particularly preferable to use the twin-screw extruder. From the viewpoint of improving the dispersion state between the polymer having an alicyclic structure in its side chain and the polypropylene resin during compounding, and thereby further increasing the dielectric breakdown voltage of the obtained biaxially oriented polypropylene film at high temperatures, it is preferable to keep the resin temperature during compounding within the following temperature range. First, the temperature is preferably 300°C or less, and more preferably 280°C or less. Meanwhile, the temperature is preferably 200°C or more, and more preferably 230°C or more.

The content of the resin A in the resin composition obtained by compounding is preferably 0.5 mass% or more, more preferably 1 mass% or more, still more preferably 5 mass% or more, and particularly preferably 9 mass% or more when the total amount of components to be compounded is 100 mass% from the viewpoint of heat resistance of the obtained biaxially oriented polypropylene film. On the other hand, from the viewpoint of enhancing the dispersibility of the resin A to improve the stretchability, the content of the resin A in the resin composition obtained by compounding is preferably 45 mass% or less, and more preferably 40 mass% or less.

The amount of the antioxidant is preferably 0.1 parts by mass or more, more preferably 0.3 parts by mass or more, and still more preferably 0.4 parts by mass or more with respect to 100 parts by mass of the resin components of the resin composition obtained by compounding. An upper limit of the amount is 1.0 part by mass. In addition, by setting the mesopentad fraction of the polypropylene resin to 0.960 or more, the obtained biaxially oriented polypropylene film has a high melting point and is suitable for use at high temperatures, which is preferable.

Next, a resin composition obtained by compounding a polypropylene resin and the compound is supplied to a single-screw extruder after adjusting the amount of the resin A to a desired level (preferably, when the total amount of the resin composition is 100 mass%, the amount of the resin A is 0.2 mass% or more and 45 mass% or less), passed through a filtration filter, and then extruded into a sheet from a slit-shaped die.

At this time, the extrusion temperature is preferably 200°C or more and 290°C or less. Thereafter, the molten sheet material extruded from the slit-shaped die is solidified on a casting drum controlled in temperature to obtain a polypropylene resin sheet.

The biaxially oriented polypropylene film of the present invention preferably has at least one layer containing both the polypropylene resin and the resin A from the viewpoint of achieving both heat resistance and stretchability. When the biaxially oriented polypropylene film of the present invention has a single layer structure, the biaxially oriented polypropylene film preferably includes only a layer containing both the polypropylene resin and the resin A. When the biaxially oriented polypropylene film of the present invention has a laminated structure, from the viewpoint of suppressing film breakage when the area stretching ratio is increased, a two-type two-layer structure of layer A/layer B, a two-type three-layer structure of layer B/layer A/layer B, and the like are preferable. In the case of the above configuration, it is preferable that at least the layer A contains both the polypropylene resin and the resin A. In the above configuration, the content of the resin A in the B layer is preferably less than that in the A layer and 3% by mass or less, more preferably 1% by mass or less, and most preferably the B layer does not contain the resin A when the mass of the entire B layer is 100% by mass. Note that when the B layers are laminated on both surfaces, the compositions of the B layers on both surfaces may be the same or different from each other. In addition, when the biaxially oriented polypropylene film of the present invention is produced in a laminated structure, the resin A may be contained in only one layer among a plurality of layers, or may be contained in two or more layers. When the biaxially oriented polypropylene film of the present invention has a laminated structure, the stretchability is enhanced, and the film can be stretched at a high area stretching ratio in the preferred range even when the content of the resin A is increased to the preferred range, and the lifespan of the film capacitor can be particularly easily increased.

The method for forming the biaxially oriented polypropylene film of the present invention into a laminated structure is not particularly limited, but, for example, the following method can be adopted. As a raw material for the layer A, a resin composition obtained by compounding a polypropylene resin and the compound of the resin A is mixed and supplied to a single-screw extruder, and as a raw material for the layer B, only the polypropylene resin is supplied to another single-screw extruder. Thereafter, the molten resin is laminated in a two-layer configuration of layer A/layer B or a three-layer configuration of layer B/layer A/layer B by a feed block method by melt co-extrusion, and extruded into a sheet from a slit-shaped die and solidified on a casting drum controlled in temperature to obtain an unstretched polypropylene film.

Incidentally, the temperature of the casting drum is preferably 10°C or more and 110°C or less, and more preferably 10°C or more and 95°C or less from the viewpoint of cooling and solidifying the molten resin composition while appropriately controlling the growth of crystals regardless of whether the film has a single layer configuration or a laminated structure.

As a method for bringing the molten sheet to adhere to the casting drum, any one of an electrostatic application method, an adhesion method using surface tension of water, an air knife method, a press roll method, an underwater casting method, an air chamber method, and the like may be used, and the air knife method that provides good flatness and is capable of controlling surface roughness is preferable. Further, in order to prevent vibration of the film, it is also preferable to appropriately adjust a position of the air knife such that air flows downstream of the film production. The air temperature of the air knife is preferably 5°C or more and 130°C or less.

Next, the unstretched polypropylene film is biaxially stretched to be biaxially oriented. For the stretching to achieve biaxial orientation, either a sequential biaxial stretching method, in which stretching is performed sequentially in the longitudinal direction and the width direction, or a simultaneous biaxial stretching method, in which stretching is performed simultaneously, may be used. Hereinafter, the case of the sequential biaxial stretching method will be described. First, during the stretching, the unstretched polypropylene film is brought into contact with a roll set at a predetermined stretching temperature in the longitudinal direction, and stretched at a predetermined ratio in the longitudinal direction. The stretching temperature in the longitudinal direction is preferably 140°C or higher from the viewpoint of suppressing film breakage, and particularly when the glass transition temperature of the resin A is 140° or higher, the stretching temperature is preferably set to a temperature equal to or higher than the glass transition temperature of the resin A from the viewpoint of increasing the withstand voltage at high temperatures of a biaxially oriented polypropylene film obtained by enhancing the followability of the resin A to the polypropylene resin. On the other hand, from the viewpoint of preventing melting of the polypropylene resin, the stretching temperature in the longitudinal direction is preferably 170°C or lower, more preferably 165°C or lower, and still more preferably 160°C or lower.

In addition, the stretching ratio in the longitudinal direction is preferably 3.5 times or more, more preferably 4.0 times or more, and still more preferably 5.0 times or more from the viewpoint of increasing the area stretching ratio and increasing the dielectric breakdown voltage at high temperatures. On the other hand, from the viewpoint of suppressing film breakage, the stretching ratio in the longitudinal direction is preferably 15 times or less, and more preferably 10 times or less. The unstretched polypropylene film is stretched in the longitudinal direction as described above, and then cooled to room temperature to obtain a uniaxially oriented polypropylene film.

Then, the uniaxially oriented polypropylene film obtained is guided to a preheating chamber of a tenter while both end portions in the width direction of the film are held by clips, preheated at a temperature within ±3°C of an ambient temperature of a stretching chamber, then introduced into a stretching chamber, and stretched in the width direction while both end portions in the width direction of the uniaxially oriented polypropylene film are held by clips. The ambient temperature (stretching temperature in the width direction) of the stretching chamber at this time is preferably 150°C or higher, more preferably 155°C or higher, and still more preferably 160°C or higher from the viewpoint of uniformly stretching the resin A having a high glass transition temperature to improve the heat resistance of the biaxially oriented polypropylene film. Meanwhile, from the above viewpoint, the stretching temperature in the width direction is preferably

190°C or less, and more preferably 185°C or less.

From a viewpoint of increasing the dielectric breakdown voltage of the obtained biaxially oriented polypropylene film, the stretching ratio in the width direction is preferably 5.0 times or more, more preferably 6.5 times or more, and still more preferably 8.3 times or more. Meanwhile, from a viewpoint of stably performing the film formation, the stretching ratio in the width direction is preferably 20.0 times or less, more preferably 17.0 times or less, and still more preferably 15.0 times or less.

The area stretching ratio is preferably 20.0 times or more from the viewpoint of molding a film into a thin film and from the viewpoint of suppressing the relaxation of the orientation of the polypropylene resin when the temperature is increased momentarily. In the present invention, the area stretching ratio is obtained by multiplying the stretching ratio in the width direction by the stretching ratio in the longitudinal direction. Note that, in the present invention, the stretching ratio in the width direction refers to the stretching ratio after the stretching in the width direction and before the relaxation treatment. From the viewpoint of increasing the usable temperature, the area stretching ratio is more preferably 31 times or more, still more preferably 39 times or more, and particularly preferably 45 times or more. An upper limit of the area stretching ratio is not particularly limited, and is 90 times in a case of the sequential biaxial stretching and 150 times in a case of the simultaneous biaxial stretching from the viewpoint of feasibility.

In the production of the biaxially oriented polypropylene film of the present invention, it is preferable to provide a heat treatment and a relaxation treatment step after biaxial stretching. In this step, from the viewpoint of enhancing the reliability of the film capacitor when the biaxially oriented polypropylene film is used as a dielectric of the film capacitor, it is preferable to perform heat treatment at a temperature of 150°C or more and 190°C or less in a tenter ambient temperature while applying a relaxation of 2 to 30% in the width direction, with both end portions in the width direction held in a tensioned state by clips. From the above viewpoint, the heat treatment temperature is preferably 150°C or more and 167°C or less. In addition, from the viewpoint of enhancing the reliability and lifespan when the biaxially oriented polypropylene film is used as a dielectric of a film capacitor, the relaxation treatment rate is preferably 5% or more, more preferably 7% or more, still more preferably 9% or more, particularly preferably 10% or more, and most preferably 15% or more. Meanwhile, from the viewpoint of increasing the dielectric breakdown voltage of the biaxially oriented polypropylene film, the relaxation treatment is more preferably 25% or less, and still more preferably 18% or less.

After the heat treatment and the relaxation treatment, the biaxially oriented polypropylene film is guided to the outside of the tenter, and the clips at both end portions in the width direction are released in a room temperature atmosphere. Then, the film edge portion is slit in a winder step, and the biaxially oriented polypropylene film is wound into a roll. Here, in order to improve adhesion of deposited metal before winding up the biaxially oriented polypropylene film, it is preferable to perform a surface treatment such as a corona discharge treatment in air, nitrogen, carbon dioxide, or a mixed gas thereof on at least one surface.

Note that in order to obtain the biaxially oriented polypropylene film of the present invention, specific examples of intended production conditions are as follows. Note that, although it is preferable to satisfy all of these production conditions, all of the conditions may not necessarily be included but may be appropriately combined. For example, the simultaneous biaxial stretching may be employed instead of "the sequential biaxial stretching in which the preheating temperature before the stretching in the width direction is the stretching temperature in the width direction +5°C or more and +15°C or less".

- The resin A is contained.
- The mesopentad fraction of the polypropylene resin which is the main component is 0.960 or more.
- Pre-kneading the resin A and the polypropylene resin is performed.
- When the total amount of components of the biaxially oriented polypropylene film is 100 mass%, the content of the resin A is 0.2 mass% or more and 45 mass% or less.
- The area stretching ratio of the biaxial stretching is 20.0 times or more.
- The stretching ratio in the width direction is set to 5.0 times or more.
- The heat treatment and the relaxation treatment have been performed after the biaxial stretching.
- The heat treatment temperature after biaxial stretching is 150°C or more and 190°C or less.

Next, a metal membrane laminate film obtained using the biaxially oriented polypropylene film of the present invention, a film capacitor obtained using the metal membrane laminate film, and a method for producing the metal membrane laminate film and the film capacitor will be described.

The metal membrane laminate film of the present invention has a metal membrane on at least one surface of the biaxially oriented polypropylene film of the present invention. This metal membrane laminate film can be obtained by disposing the metal membrane on at least one surface of the biaxially oriented polypropylene film according to the present invention.

In the present invention, a method for forming the metal membrane is not particularly limited, and for example, a method is preferably used in which aluminum or an alloy of aluminum and zinc is vapor-deposited on at least one surface of

the biaxially oriented polypropylene film to provide a metal membrane such as a deposited membrane as an internal electrode of the film capacitor. In this case, other metal components such as nickel, copper, gold, silver, and chromium may be deposited simultaneously with aluminum or sequentially. Further, on the deposited membrane, a protective layer can also be provided using an oil or the like. In a case where surface roughness of the biaxially oriented polypropylene film is different between front and back surfaces of the film, it is preferable to dispose the metal membrane on a smooth surface side to form the metal membrane laminate film from the viewpoint of enhancing the withstand voltage properties.

In the present invention, if necessary, after the metal membrane is formed, the metal membrane laminate film can be subjected to an annealing treatment or a heat treatment at a specific temperature. The temperature at which the annealing is performed is preferably in the range of T[°C] to (T + 50)°C or lower when the temperature assumed to be used is T[°C], and more preferably in the range of (TgA - 50)°C to (TgA + 20)°C when the glass transition temperature of the resin A used for the metal membrane laminate film of the present invention is TgA[°C]. Further, for insulation or other purposes, at least one surface of the metal membrane laminate film may also be coated with a resin such as polyphenylene oxide.

The film capacitor of the present invention is formed using the metal membrane laminate film of the present invention. In other words, the film capacitor of the present invention includes the metal membrane laminate film of the present invention. For example, the film capacitor of the present invention can be obtained by laminating or winding the metal membrane laminate film of the present invention described above by various methods. A preferable example of a method for producing a wound type film capacitor is as follows.

Aluminum is vapor-deposited on one surface of the biaxially oriented polypropylene film in a reduced pressure state. At that time, the vapor deposition is performed in a stripe shape having a margin portion running in the longitudinal direction. Next, slits are made with a blade at a center of each of deposited portions and a center of each of margin portions on the surface to produce a tape-shaped winding reel having a margin on one side of the surface. Two tape-shaped winding reels respectively having a left margin and a right margin are overlapped and wound such that the deposited part protrudes from the margin portion in the width direction to obtain a wound body.

In a case where both surfaces of the film are vapor-deposited, the vapor deposition is performed in the stripe shape having the margin portion running in the longitudinal direction on one surface, and the vapor deposition is performed on the other surface in the stripe shape such that the margin portion in the longitudinal direction is positioned at a center of the deposited portion on the back surface. Next, the slits are made with the blade at the center of each of the margin portions on the front and back surfaces to produce a tape-shaped winding reel having two surfaces each having a margin on one side (for example, when a margin is on the right side of the front surface, a margin is on the left side of the back surface). One obtained reel and one undeposited layered film are overlapped with each other such that the metallized film protrudes from the layered film in the width direction and are wound to obtain a wound body.

Examples of the method for obtaining the film capacitor of the present invention from the metal layer-laminated film of the present invention include a method in which a core material is removed from the wound body produced as described above, the wound body is pressed, metallikon is thermally sprayed onto both end surfaces to form external electrodes, and a lead wire is welded to the metallikon to produce a wound type film capacitor. Applications of film capacitors are wide-ranging, including use in power control units of electric vehicles, hybrid vehicles, fuel cell vehicles, and other electric automobiles, and electric aircraft such as drones, railway vehicle applications, solar power and wind power generation applications, and general household appliance applications. The film capacitor of the present invention can also be suitably used for these applications. In addition, the biaxially oriented polypropylene film of the present invention can be preferably used in various applications such as a packaging film, a release film, a processing film, a sanitary product, an agricultural product, a building product, and a medical product, particularly in applications including a heating step in film processing.

Hereinafter, a power control unit, an electric vehicle, and an electric aircraft of the present invention will be described. The power control unit of the present invention includes the film capacitor of the present invention. The power control unit is a system that manages power in an electric vehicle, an electric aircraft, or the like that has a mechanism driven by electric power. By mounting the film capacitor of the present invention on the power control unit, it is possible to reduce the size, improve the heat resistance, and increase the efficiency of the power control unit itself, and as a result, the fuel efficiency of an electric vehicle, an electric aircraft, and the like on which the power control unit of the present invention is mounted is improved.

The electric vehicle of the present invention includes the power control unit of the present invention. Here, the electric vehicle refers to an automobile that has a mechanism driven by electric power, such as an electric automobile, a hybrid vehicle, and a fuel cell vehicle. As described above, the power control unit of the present invention can be reduced in size and is also excellent in heat resistance and efficiency, and thus, the electric vehicle includes the power control unit of the present invention, which leads to improvement in fuel efficiency and the like.

The electric aircraft of the present invention includes the power control unit of the present invention. Here, the electric aircraft refers to an aircraft that has a mechanism driven by electric power, such as a manned electric aircraft and a drone. As described above, since the power control unit of the present invention can be reduced in size and has excellent heat resistance and efficiency, the electric aircraft including the power control unit of the present invention leads to

improvement in fuel efficiency and the like.

## EXAMPLES

Hereinafter, the present invention will be described more specifically with reference to Examples, but the present invention is not limited to the embodiments described below.

[Measurement and Evaluation Methods]

(1) Thickness of Biaxially Oriented Polypropylene Film

The thicknesses of the biaxially oriented polypropylene film were measured at 10 random positions in an atmosphere of 65% RH at 23°C using a contact type electronic micrometer (K-312A type) manufactured by ANRITSU CORPORATION. The arithmetic average value of the thicknesses at the 10 points was taken as the thickness (unit: μm) of the biaxially oriented polypropylene film.

(2) Main Orientation Axis Direction and Main Orientation Axis Orthogonal Direction of Biaxially Oriented Polypropylene Film

For each of Examples and Comparative Examples, the main orientation axis direction of the biaxially oriented polypropylene film was determined as follows according to the following method (tensile test). Note that the main orientation axis orthogonal direction of the biaxially oriented polypropylene film was a direction orthogonal to the main orientation axis direction in the film surface.

Examples 1 to 10 and Comparative Examples 1 and 3: The width direction was the main orientation axis direction of the biaxially oriented polypropylene film.

<Tensile Test>

First, a biaxially oriented polypropylene film was cut into a rectangle having a length of 50 mm × a width of 10 mm to obtain the sample <1>, and the direction of the long side of the sample <1> was defined as 0°. Next, the rectangular sample <2> having the same size was collected such that the long side direction was a direction rotated rightward by 15° from the 0° direction, and thereafter, the long side direction of the rectangular sample was similarly rotated by 15° to collect the rectangular samples <3> to <12>. Next, each of the samples in the rectangular shape was set in a tensile tester at an initial chuck-to-chuck distance of 20 mm such that the long side direction was a tensile direction (measurement direction), and a tensile test was performed at a tensile speed of 300 mm/min in an atmosphere at 23°C. In this case, the maximum load until a rectangular sample breakage was read, and the value obtained by dividing the maximum load by the cross-sectional area (film thickness × width) of the sample before the test was calculated as the stress of the maximum point strength. The long side direction of the sample having the maximum value was defined as the main orientation axis direction of the biaxially oriented polypropylene film.

(3) Melting Point and Glass Transition Temperature (Tg) of Resin

The melting point and the glass transition temperature (Tg) of the resin were measured in accordance with JIS K7121-1987. Using a differential scanning calorimeter (EXSTAR DSC6220 manufactured by Seiko Instruments Inc.), 3 mg of the film or the polymer in the nitrogen atmosphere was heated from 30°C to 260°C under the condition of 20°C/min, then kept at 260°C for 5 minutes, and then cooled to 30°C under the condition of 20°C/min. Subsequently, after being held at 20°C for 5 minutes, reheating was performed from 30°C to 260°C at a rate of 20°C/min as the second heating. In the DSC curve obtained in the reheating process, the peak temperature of the endothermic peak was defined as the melting point of the resin, and the glass transition temperature (Tg) was calculated by the following formula. In a case where a plurality of the endothermic peaks were observed in single measurement, a peak temperature of an endothermic peak having a highest peak temperature was taken as the peak temperature in the measurement.

Glass transition temperature = (Extrapolated glass transition starting temperature + Extrapolated glass transition end temperature)/2.

(4) Storage Elastic Modulus E' in Main Orientation Axis Direction at 145°C

Measurement was performed under the following apparatus and conditions. First, a biaxially oriented polypropylene film sample, which was cut into a rectangle with the main orientation axis direction as the long side direction (width (short side): 10 mm × length (long side): 20 mm), was attached to the chuck portion of the apparatus under an atmosphere of 23°C and set in the furnace. Thereafter, the inside of the furnace was cooled with liquid nitrogen, the temperature of the sample was raised from -100°C to 180°C, a viscoelasticity-temperature curve was drawn by a dynamic viscoelasticity method, and the storage elastic modulus E' in the main orientation axis direction at 145°C was read. Note that the number of measurement tests was n = 3, and the average value of the storage elastic modulus E' in the main orientation axis direction at 145°C was calculated. The obtained value was employed as the storage elastic modulus E' (Pa) of the biaxially oriented polypropylene film in the main orientation axis direction at 145°C.

<Apparatus and Conditions>

Apparatus: EXSTAR DMS6100 (manufactured by Seiko Instruments Inc.)
Test mode: Tensile mode
Chuck-to-chuck distance: 20 mm
Frequency: 10 Hz
Strain amplitude: 10.0 μm
Gain: 1.5
Initial value of force amplitude: 400 mN
Temperature range: -100 to 180°C
Heating rate: 5°C/min
Measurement atmosphere: In air
Measurement thickness: The film thickness of the above (1) was used.

(5) Internal Haze

A haze meter (HGM-2DP for illuminant C) manufactured by Suga Test Instruments Co., Ltd. was used. A biaxially oriented polypropylene film sample was cut into 6.0 cm × 3.0 cm and inserted into a quartz cell with an optical path length of 1 cm filled with purified water. Thereafter, light was perpendicularly incident on the sample surface to measure the haze. The same measurement was performed five times, and the average value of the obtained values was taken as the internal haze of the biaxially oriented polypropylene film.

(6) Length in Thickness Direction of Domain in Cross-Section in the Film Main Orientation Axis Direction-Thickness Direction

An ultrathin section having a cross section in the main orientation axis direction-thickness direction of a biaxially oriented polypropylene film was collected using a microtome method (the cross section in the main orientation axis direction-thickness direction refers to a direction parallel to the main orientation axis direction and perpendicular to the film surface). The collected section was stained with $RuO_4$, and then the cross-section was observed using a transmission electron microscope (TEM) under the conditions described below, and images were acquired. Note that, at this time, since the resin A was dyed darker than the polypropylene-based resin, the following measurement was performed using the blackened site as a domain.

· Apparatus: Apparatus: Transmission electron microscope (TEM) HT7700 manufactured by Hitachi, Ltd.
· Acceleration voltage: 100 kV
· Observation magnification: 20,000 times

In the measurement of the length of the domain in the thickness direction, in the acquired image, five domains were first selected in the upward direction in the order of proximity from the center of the field of view without moving the field of view from the center of the layer containing both the polypropylene resin and the resin A, and then five domains were selected in the downward direction. The lengths in the thickness direction of the selected domains were measured, and the average value was taken as the length in the thickness direction of the domain of the resin A. Note that, when the selected domain had an end portion outside the field of view, the field of view was moved from one end portion toward the other end portion to acquire a plurality of images, and the length of the domain in the main orientation axis direction was obtained from the joined images. When 10 domains could not be selected in one field of view, the observation was continued by moving to another field of view until the measurement of 10 domains was completed.

(7) Thermal Shrinkage Rate in Main Orientation Axis Direction at 135°C

A sample was cut into a rectangle having a length of 30 mm (measurement direction) × a width of 10 mm with the main orientation axis direction of the biaxially oriented polypropylene film as a long side. Gauge marks parallel to the width direction were applied at positions 5 mm toward the center from the middle of each short side of the sample, and the length between the gauge marks was set as the gauge length of 20 mm (L0). Next, in a state sandwiched between sheets of paper, the sample was heated for 10 minutes in an oven maintained at 135°C, then taken out and cooled to room temperature. After cooling, the length (L1) between the two aforementioned gauge marks was measured, and the thermal shrinkage rate was determined using the following formula. The same measurement was performed 5 times, and the arithmetic average value was taken as the thermal shrinkage rate in the main orientation axis direction at 135°C.

$$\text{Thermal shrinkage rate} = \{(L0 - L1)/L0\} \times 100\ (\%)$$

(8) Performance Evaluation of Biaxially Oriented Polypropylene Film

<Evaluation of Lifespan>

The wet tension of each surface of the biaxially oriented polypropylene film was measured according to JIS K 6768-1995. Aluminum was deposited on the surface having a higher wet tension with a vacuum deposition machine manufactured by ULVAC, Inc. such that the film resistance was 10 Ω/sq. During the vapor deposition, there were produced a vapor-deposited film A with a vapor deposition pattern having a so-called T-shaped margin (pitch (period) in the longitudinal direction of 17 mm, and fuse width of 0.5 mm) in which a margin portion was provided in a direction perpendicular to the longitudinal direction by the masking oil, and a vapor-deposited film B without a vapor deposition pattern having the T-shaped margin, respectively. The obtained vapor-deposited films A and B were respectively slit to obtain vapor-deposited reels A and B having a film width of 50 mm (an end portion margin width of 2 mm). Next, the vapor-deposited films were wound such that vapor-deposited reels A and B alternately overlapped, using an element winding machine (KAW-4NHB, manufactured by KAIDO MANUFACTURING CO., LTD.), such that the final element capacitance as a film capacitor element would be 10 μF, and a metallikon treatment was performed. Thereafter, heat treatment was performed for 12 hours under reduced pressure in an atmosphere at a temperature of 5°C below the glass transition temperature of the resin A used for the biaxially oriented polypropylene film, and lead wires were attached to complete the film capacitor element. After 10 film capacitor elements obtained in this manner were heated at a heat shock temperature T to be described later for 5 hours, a voltage of (film thickness (μm) × 300 VDC/μm) was applied to the film capacitor elements at 120°C for 500 hours, and then 10 element capacitances were measured, and an average value thereof was taken as an element capacitance at the heat shock temperature T. The heat shock temperature T was measured under three conditions of T = 125°C, 130°C, and 140°C, and the performance of the film was evaluated according to the following criteria. S and A respectively mean that the film has a sufficient lifespan even after being subjected to high temperatures and can be suitably used, B and C mean that the film is inferior in practical performance but still usable, and D means that the film is unsuitable for use.

S: The element capacitance after the test was 9.3 μF or more in any case of T = 125°C, 130°C, and 140°C.
A: The element capacitance after the test was 8.5 μF or more in any case of T = 125°C, 130°C, and 140°C, and the element capacitance after the test was less than 9.3 μF in the test of T = 140°C.
B: The element capacitance after the test was less than 8.5 μF at T = 140°C, but the element capacitance after the test was 8.5 μF or more at T = 125°C and 130°C.
C: The element capacitance after the test was less than 8.5 μF at T = 130°C, 140°C, but the element capacitance after the test was 8.5 μF or more at T = 125°C.
D: In any case of T = 125°C, 130°C, and 140°C, the element capacitance after the test was less than 8.5 μF.

<Evaluation of Stability and Stretchability during Molding>

The thickness of the biaxially oriented polypropylene film produced under the conditions described in Examples and Comparative Examples was measured at 50 points at 5 cm intervals in the longitudinal direction using a contact type electronic micrometer (K-312A type) manufactured by ANRITSU CORPORATION in an atmosphere of 23°C and 65%RH. With the standard deviation of the thicknesses of the obtained 50 points as σ and the average as Z, the performance of the film was evaluated according to the following criteria. A means a biaxially oriented polypropylene film which has high stability and stretchability during the molding and thus has small thickness unevenness, is excellent in withstand voltage properties and reduction in yield loss at the time of processing into a film capacitor, and can be suitably used as a film for a

film capacitor, B means a biaxially oriented polypropylene film which has moderate thickness unevenness and is inferior in practical performance but can be used for a film capacitor, and C means that the biaxially oriented polypropylene film is difficult to use for a film capacitor.

A: $\sigma/Z \leq 0.060$ was satisfied.
B: $0.060 < \sigma/Z \leq 0.10$ is satisfied.
C: $0.10 < \sigma/Z$ was satisfied.

<Evaluation of Dimensional Stability>

A biaxially oriented polypropylene film produced under the conditions described in Examples and Comparative Examples was processed in the same manner as in the above-mentioned lifespan evaluation to complete a film capacitor element. The obtained element was placed in a thermostatic bath and heated at 130°C for 10 hours, and then the form of the element was visually observed, and compared with the form of the element before heating, the dimensional stability was evaluated according to the following criteria. A means that the element can be suitably used in a 130°C environment, B means that the element can be used in a 130°C environment depending on conditions, and C means that the element cannot be used in a 130°C environment.

A: No noticeable deformation was observed in the film capacitor element.
B: The film capacitor element was curved or expanded or contracted, but the metallikon was not deformed.
C: The metallikon of the film capacitor element was deformed.

<Evaluation of Film Low Voltage Breakdown>

The extent to which a region having a low withstand voltage at 130°C was present in the biaxially oriented polypropylene film produced under the conditions described in Examples and Comparative Examples was measured in accordance with JIS C2330(2001)7.4.11.2 B method (flat plate electrode method) in an atmosphere after the film was heated for 1 minute in an oven maintained at 130°C. However, as for a lower electrode, one obtained by placing "Conductive Rubber E-100 <65>" manufactured by TOGAWA RUBBER CO., LTD., which has the same dimensions on a metal plate described in Method B of JIS C2330(2001)7.4.11.2 was used. A dielectric breakdown voltage test was conducted 30 times, and the obtained values were converted to V/μm by dividing by the film thickness (measured in (1) above). Among the 30 measured values (calculated values), the average value of the 4th to 6th smallest values, in ascending order from the minimum value, was determined as the low-voltage breakdown value. From the evaluated low voltage breakdown value, the small number of regions with low withstand voltage was evaluated as follows. S means that there is almost no region having a low withstand voltage, and even a film capacitor having a high rated voltage at high temperatures is suitable for use in a small size, A, B, and C mean that a film capacitor having a low rated voltage can be used in a small size, and D means that a film capacitor having a large size is not suitable for use.

S: The low voltage breakdown value was 280 V/μm or more.
A: The low voltage breakdown value was 240 V/μm or more and less than 280 V/μm.
B: The low voltage breakdown value was 200 V/μm or more and 240 V/μm or more.
C: The low voltage breakdown value was 150 V/μm or more and 200 V/μm or less.
D: The low voltage breakdown value was lower than 150 V/μm.

(9) Mesopentad Fraction

In the case of measuring the mesopentad fraction of the polypropylene resin, 1 g of the polypropylene resin was freeze-pulverized, and extracted with n-heptane for 2 hours by a 50 mL Soxhlet extraction method to recover an n-heptane insoluble fraction from which impurities and additives in the polypropylene were removed, and vacuum-dried at 130°C for 2 hours or more to obtain a sample. The sample was dissolved in a solvent, and the mesopentad fraction (mmmm) was obtained using $^{13}$C-NMR under the following conditions.

Measurement conditions

· Apparatus: DRX-500 manufactured by Bruker Corporation
· Measurement nucleus: $^{13}$C nucleus (Resonance frequency: 125.8 MHz)

· Measurement concentration: 10% by weight
· Solvent: Benzene: Deuterated ortho-dichlorobenzene = 1:3 mixed solution (Volume ratio)
· Measurement temperature: 130°C
· Spinning speed: 12 Hz
· NMR specimen tube: 5 mm tube
· Pulse width: 45° (4.5 μs)
· Pulse repetition period: 10 seconds
· Data point: 64 K
· Number of integrations: 10,000 times
· Measurement mode: complete decoupling

Analysis conditions

Fourier transformation was performed with an LB (line broadening factor) of 1, and the mmmm peak was set to 21.86 ppm. Peak splitting was performed using WINFIT software (available from Bruker Corporation). At that time, the peak splitting was carried out from a peak on high magnetic field in the following manner, and automatic fitting of the software was carried out to perform the optimization of peak splitting. The total of peak fractions of mmmm and ss (spinning side band peak of mmmm) was taken as the mesopentad fraction (mmmm).

(1) mrrm
(2) (3)rrrm (Split as two peaks)
(4) rrrr
(5) mrmm + rmrr
(6) mmrr
(7) mmmr
(8) ss (Spinning side band peak of mmmm)
(9) mmmm
(10) rmmr

The same measurement was performed five times for the same sample, and the average value of the obtained mesopentad fractions was set as the mesopentad fraction of the sample.
Note that, when the mesopentad fraction of the film was measured, the mesopentad fraction was measured in the same manner except that the film was used instead of the polypropylene resin.

(10) Melt Flow Rate (MFR)

The MFR of the resin was measured in accordance with the condition M (230°C, 2.16 kg) of JIS K 7210-1(2014).

[Resin and the Like]

In the production of the biaxially oriented polypropylene film in each of Examples and Comparative Examples, the following resins and the like were used.

(11) Crystallization Temperature (Tmc) in Temperature Lowering Process of Polypropylene

The crystallization temperature (Tmc) in the temperature lowering process of polypropylene when the resin A was mixed with polypropylene was measured according to JIS K7121-1987 as follows. Respective components were mixed to be 5 parts by mass of the resin A and 95 parts by mass of the polypropylene resin 1 to be described later, and the mixture was kneaded and extruded with a twin-screw extruder set at 260°C, and then the strands were cooled with water and made into chips to prepare the resin A mixed sample. Next, using a differential scanning calorimeter (EXSTAR DSC6220, manufactured by Seiko Instruments Inc.), 3 mg of the resin A mixed sample was heated from 30°C to 260°C at a rate of 20°C/min under a nitrogen atmosphere. Subsequently, the sample was held at 260°C for 5 minutes, and then cooled to 30°C at a rate of 20°C/min, and the peak temperature of the exothermic peak obtained in the temperature lowering process was measured. The same measurement was performed three times, and the average value of the obtained peak temperatures was taken as the crystallization temperature (Tmc) in the temperature lowering process of polypropylene when the resin A was mixed with polypropylene. Note that, in a case where a plurality of the exothermic peaks were observed in single measurement, a peak temperature of the exothermic peak having the highest peak temperature was taken as the peak temperature in the measurement.

<Polypropylene Resin>

Polypropylene resin 1:

A homopolypropylene resin having a mesopentad fraction of 0.970, a melting point of 166°C, and a melt flow rate (MFR) of 3.3 g/10 min ("Borclean" (trade name) HC300BF available from Borealis AG).

Polypropylene resin 2:

A polypropylene resin having a mesopentad fraction of 0.984, a melting point of 168°C, and an MFR of 2.5 g/10 min, which is manufactured by Prime Polymer Co., Ltd.

<Resin Components Other Than Polypropylene Resin>

Raw material (C1):

"ViviOn" (registered trademark) product name 1325 manufactured by USI. Resin having an alicyclic structure in a side chain (corresponding to the resin A). The glass transition temperature is 128°C and the MFR is 13 g/10 min.

Raw material (C2):

"ViviOn" (registered trademark) product name MDP-0011 manufactured by USI. Resin having an alicyclic structure in a side chain (corresponding to the resin A). The glass transition temperature is 147°C and the MFR is 6.0 g/10 min.

Raw material (C3):

"TOPAS" (registered trademark) 6013F-04, manufactured by Polyplastics Co., Ltd. is a resin (COC) obtained by copolymerizing ethylene and norbornene, and does not correspond to the resin A. Glass transition temperature: 138°C, amorphous)

Raw material (C4):

"TOPAS" (registered trademark) 6017S-04, manufactured by Polyplastics Co., Ltd. is a resin (COC) obtained by copolymerizing ethylene and norbornene, and does not correspond to the resin A. Glass transition temperature: 178°C, amorphous).

<Components other than Resin Component>

Antioxidant:

"IRGANOX" (registered trademark) 1010 manufactured by Ciba Specialty Chemicals.

<Pre-Kneading Raw Material>

Raw material (A1):

Respective components were mixed such that the polypropylene resin 1 was 59.5 parts by mass, the raw material (C1) was 40 parts by mass, and the antioxidant was 0.5 parts by mass, and kneaded and extruded with the twin-screw extruder set at 260°C, and then strands were cooled with water and made into chips.

Raw material (A2):

Respective components were mixed such that the polypropylene resin 1 was 59.5 parts by mass, the raw material (C2) was 40 parts by mass, and the antioxidant was 0.5 parts by mass, and kneaded and extruded with the twin-screw extruder set at 260°C, and then strands were cooled with water and made into chips.

Raw material (A3):

Respective components were mixed such that the polypropylene resin 1 was 59.5 parts by mass, the raw material (C3) was 40 parts by mass, and the antioxidant was 0.5 parts by mass, and kneaded and extruded with the twin-screw extruder set at 260°C, and then strands were cooled with water and made into chips.

Raw material (A4):

Respective components were mixed such that the polypropylene resin 1 was 59.5 parts by mass, the raw material (C4) was 40 parts by mass, and the antioxidant was 0.5 parts by mass, and kneaded and extruded with the twin-screw extruder set at 260°C, and then strands were cooled with water and made into chips.

(Example 1)

A resin composition in which the raw material (A1) was 30.0 parts by mass, the polypropylene resin 1 was 69.7 parts by mass, and the antioxidant was 0.3 parts by mass was prepared by mixing each component and supplied to a single-screw extruder. The resin composition was melted at a temperature of 250°C in the single-screw extruder, foreign matters were removed with a sintered filter of 80 μm cut of which the temperature was adjusted to 250°C, and then the molten resin composition was discharged into a sheet form from a T-die. Thereafter, the molten sheet was brought into close contact with a casting drum maintained at a surface temperature of 90°C using an air knife (air temperature: 23°C), and was cooled and solidified to obtain an unstretched polypropylene film. The unstretched polypropylene film was heated to a temperature of 145°C by a plurality of roll groups, and stretched 4.0 times in the longitudinal direction between rolls having a circumferential speed difference to obtain a uniaxially oriented polypropylene film. Subsequently, the uniaxially oriented polypropylene film was guided to a tenter with both end portions in the width direction held by a plurality of clips, preheated at 172°C, and then stretched 6.0 times in the width direction at the same temperature. Furthermore, as a heat treatment and a relaxation treatment, the film was subjected to a heat treatment at 158°C while being relaxed by 12% in the width direction, and led to the outside of the tenter to release the clip. Further, the film surface (casting drum contact surface side) after the heat treatment was subjected to a corona discharge treatment at a treatment intensity of 25 W·min/$m^2$ in the air to obtain a biaxially oriented polypropylene film. The evaluation results are shown in Table 1.

(Examples 2 to 13, Comparative Examples 1 to 5)

A biaxially oriented polypropylene film was obtained in the same manner as in Example 1 except that the raw material formulation and the film formation conditions were as shown in Tables 1 and 2. The evaluation results are shown in Tables 1 and 2. Note that the film thickness was adjusted by increasing or decreasing the discharge amount of the extruder. Note that, in Comparative Example 2, an attempt was made to obtain a biaxially oriented polypropylene film having a thickness of 5.5 μm, but film formation was not possible due to film breakage (since no biaxially oriented polypropylene film was obtained, the evaluation in Table 1 is indicated by "-"). In addition, in Comparative Example 4, a polypropylene film was obtained by performing corona discharge treatment at a treatment intensity of 25 W·min/$m^2$ in the atmosphere on the casting drum contact surface side of the film cooled by the cast drum without performing longitudinal stretching and lateral stretching.

(Example 14)

A resin composition obtained by mixing the respective components such that the amount of the raw material (A1) was 30.0 parts by mass, the amount of the polypropylene resin 1 was 69.7 parts by mass, and the amount of the antioxidant was 0.3 parts by mass was supplied to a single-screw extruder for layer A, and a resin composition obtained by mixing the respective components such that the amount of the polypropylene resin 2 was 99.7 parts by mass and the amount of the antioxidant was 0.3 parts by mass was supplied to a single-screw extruder for the layer B. In each single-screw extruder, the resin composition and the polypropylene resin 1 were melted at 250°C, and foreign matters were removed with an 80 μm-cut sintered filter of which the temperature was adjusted to 230°C, and then the resin composition (for the layer A) and the polypropylene resin 1 (for the layer B) were laminated using a feed block in a three-layer structure of layer B/layer A/layer B at a lamination thickness ratio of 1/10/1. The resin composition was melted at a temperature of 250°C in the single-screw extruder, foreign matters were removed with a sintered filter of 80 μm cut of which the temperature was adjusted to 250°C, and then the molten resin composition was discharged into a sheet form from a T-die. A biaxially oriented polypropylene film was obtained in the same manner as in Example 1 except that as described above, the extruder had a configuration of two extruders, the resin was formed into a sheet with a three-layer configuration, and the raw material formulation and the film formation conditions were as shown in Table 1. The evaluation results are shown in

Table 2. Note that, as described above, the formulation described in the raw material formulation in Table 1 is the raw material of the single-screw extruder for the layer A, and the formulation described in the surface layer formulation is the raw material of the single-screw extruder for the layer B.

[Table 1-1]

| Item | | Unit | Example 1 | Example 2 | Example 3 | Example 4 | Example 5 |
|---|---|---|---|---|---|---|---|
| Raw material formulation | Polypropylene resin 1 | Parts by mass | 69.7 | 79.7 | 39.7 | 19.7 | 59.7 |
| | Polypropylene resin 2 | Parts by mass | - | - | - | - | - |
| | Raw material (A1) | Parts by mass | 30.0 | - | - | - | 18.0 |
| | Raw material (A2) | Parts by mass | - | 20.0 | 60.0 | 80.0 | 22.0 |
| | Raw material (A3) | Parts by mass | - | - | - | - | - |
| | Raw material (A4) | Parts by mass | - | - | - | - | - |
| | Antioxidant | Parts by mass | 0.3 | 0.3 | 0.3 | 0.3 | 0.3 |
| | Content of polymer having cyclic structure in side chain | mass% | 12 | 8.0 | 24 | 32 | 16 |
| Surface layer formulation | Polypropylene resin 2 | Parts by mass | - | - | - | - | - |
| | Antioxidant | Parts by mass | - | - | - | - | - |
| Membrane formation condition | Extruder temperature | °C | 250 | 255 | 255 | 255 | 255 |
| | Casting drum temperature | °C | 90 | 80 | 85 | 90 | 95 |
| | Longitudinal stretching ratio | Times | 4.0 | 4.8 | 5.4 | 5.2 | 5.0 |
| | Longitudinal stretching temperature | °C | 145 | 149 | 152 | 152 | 149 |
| | Stretching ratio in width direction | Times | 6.0 | 7.8 | 8.5 | 8.1 | 9.0 |
| | Area stretching ratio | Times | 24 | 37 | 46 | 42 | 45 |
| | Preheating temperature in width direction | °C | 172 | 177 | 177 | 178 | 174 |
| | Stretching temperature in width direction | °C | 172 | 177 | 177 | 178 | 174 |
| | Heat treatment temperature | °C | 158 | 162 | 166 | 167 | 160 |
| | Relaxation treatment | % | 12 | 14 | 15 | 15 | 10 |
| Film characteristics | Film thickness | μm | 6.1 | 3.8 | 2.8 | 4.2 | 4.3 |
| | Storage Elastic Modulus E' in Main Orientation Axis Direction at 145°C | $\times 10^8$ Pa | 0.92 | 5.1 | 7.1 | 6.9 | 6.2 |
| | Internal Haze | % | 0.7 | 0.5 | 1.1 | 4.1 | 0.8 |
| | Thermal Shrinkage Rate in Main Orientation Axis Direction at 135°C | % | 4.1 | -0.5 | 0.1 | -0.1 | 0.2 |
| | Length of domain in thickness direction | μm | 0.30 | 0.21 | 0.08 | 0.11 | 0.10 |
| | Evaluation of film low voltage breakdown | - | A | A | B | C | A |
| | Evaluation of dimensional stability | - | B | A | A | A | A |
| | Evaluation of lifespan | - | C | B | A | A | A |
| | Evaluation of stability and stretchability during molding | - | A | A | A | B | A |

[Table 1-2]

| Item | | | Example 6 | Example 7 | Example 8 | Example 9 | Example 10 |
|---|---|---|---|---|---|---|---|
| Raw material formulation | Polypropylene resin 1 | Parts by mass | 94.7 | 69.7 | 39.7 | 79.7 | 97.2 |
| | Polypropylene resin 2 | Parts by mass | - | - | - | - | - |
| | Raw material (A1) | Parts by mass | 5.0 | - | 36.0 | - | 2.5 |
| | Raw material (A2) | Parts by mass | - | 30.0 | 24.0 | 20.0 | - |
| | Raw material (A3) | Parts by mass | - | - | - | - | - |
| | Raw material (A4) | Parts by mass | - | - | - | - | - |
| | Antioxidant | Parts by mass | 0.3 | 0.3 | 0.3 | 0.3 | 0.3 |
| | Content of polymer having cyclic structure in side chain | mass% | 2.0 | 12 | 24 | 8.0 | 1.0 |
| Surface layer formulation | Polypropylene resin 2 | Parts by mass | - | - | - | - | - |
| | Antioxidant | Parts by mass | - | - | - | - | - |
| Membrane formation condition | Extruder temperature | °C | 255 | 255 | 255 | 245 | 245 |
| | Casting drum temperature | °C | 90 | 90 | 90 | 90 | 105 |
| | Longitudinal stretching ratio | Times | 5.2 | 5.4 | 4.8 | 4.8 | 4.7 |
| | Longitudinal stretching temperature | °C | 151 | 152 | 150 | 145 | 148 |
| | Stretching ratio in width direction | Times | 10.0 | 8.5 | 9.0 | 8.5 | 8.7 |
| | Area stretching ratio | Times | 52 | 46 | 43 | 41 | 41 |
| | Preheating temperature in width direction | °C | 177 | 177 | 178 | 170 | 170 |
| | Stretching temperature in width direction | °C | 177 | 175 | 178 | 170 | 170 |
| | Heat treatment temperature | °C | 160 | 166 | 165 | 160 | 158 |
| | Relaxation treatment | % | 8 | 15 | 10 | 12 | 8 |
| Film characteristics | Film thickness | µm | 3.1 | 2.8 | 4.3 | 2.8 | 4.2 |
| | Storage Elastic Modulus E' in Main Orientation Axis Direction at 145°C | $\times 10^8$Pa | 0.51 | 5.7 | 6.2 | 5.4 | 0.4 |
| | Internal Haze | % | 0.3 | 0.7 | 0.8 | 5.6 | 0.5 |
| | Thermal Shrinkage Rate in Main Orientation Axis Direction at 135°C | % | 5.5 | 0.4 | 1.4 | 0.1 | 6 |
| | Length of domain in thickness direction | µm | 0.05 | 0.07 | 0.10 | 0.35 | 0.7 |
| | Evaluation of film low voltage breakdown | - | B | A | A | B | C |
| | Evaluation of dimensional stability | - | C | A | B | A | C |
| | Evaluation of lifespan | - | C | A | B | C | C |
| | Evaluation of stability and stretchability during molding | - | A | A | A | A | A |

[Table 2-1]

| Item | | | Example 11 | Example 12 | Example 13 | Example 14 |
|---|---|---|---|---|---|---|
| Raw material formulation | Polypropylene resin 1 | Parts by mass | - | - | - | 69.7 |
| | Polypropylene resin 2 | Parts by mass | 96.4 | 93.7 | 99.6 | - |
| | Raw material (A1) | Parts by mass | 3.3 | 6.0 | 0.1 | 30.0 |
| | Raw material (A2) | Parts by mass | - | - | - | - |
| | Raw material (A3) | Parts by mass | - | - | - | - |
| | Raw material (A4) | Parts by mass | - | - | - | - |
| | Antioxidant | Parts by mass | 0.3 | 0.3 | 0.3 | 0.3 |
| | Content of polymer having cyclic structure in side chain | mass% | 1.3 | 2.4 | 0.4 | 12 |
| Surface layer formulation | Polypropylene resin 2 | Parts by mass | - | - | - | 99.7 |
| | Antioxidant | Parts by mass | - | - | - | 0.3 |
| Membrane formation condition | Extruder temperature | °C | 245 | 250 | 255 | 250 |
| | Casting drum temperature | °C | 90 | 90 | 90 | 90 |
| | Longitudinal stretching ratio | Times | 5.8 | 6.0 | 5.2 | 5.8 |
| | Longitudinal stretching temperature | °C | 151 | 151 | 145 | 145 |
| | Stretching ratio in width direction | Times | 10.4 | 11.0 | 8.8 | 10.8 |
| | Area stretching ratio | Times | 60 | 66 | 46 | 63 |
| | Preheating temperature in width direction | °C | 177 | 177 | 177 | 172 |
| | Stretching temperature in width direction | °C | 174 | 176 | 175 | 170 |
| | Heat treatment temperature | °C | 160 | 160 | 160 | 158 |
| | Relaxation treatment | % | 12 | 12 | 12 | 17 |
| Film characteristics | Film thickness | μm | 2.6 | 2.4 | 3.1 | 3.3 |
| | Storage Elastic Modulus E' in Main Orientation Axis Direction at 145°C | $\times 10^8$Pa | 5.2 | 6.0 | 1.2 | 6.8 |
| | Internal Haze | % | 0.1 | 0.2 | 0.1 | 0.4 |
| | Thermal Shrinkage Rate in Main Orientation Axis Direction at 135°C | % | 1.2 | 1.1 | 1.3 | 0.3 |
| | Length of domain in thickness direction | μm | 0.05 | 0.05 | 0.05 | 0.30 |
| | Evaluation of film low voltage breakdown | - | S | S | A | A |
| | Evaluation of dimensional stability | - | B | B | B | A |
| | Evaluation of lifespan | - | B | B | C | S |
| | Evaluation of stability and stretchability during molding | - | A | A | A | B |

[Table 2-2]

| Item | | | Comparative Example 1 | Comparative Example 2 | Comparative Example 3 | Comparative Example 4 | Comparative Example 5 |
|---|---|---|---|---|---|---|---|
| Raw material formulation | Polypropylene resin 1 | Parts by mass | 39.7 | 79.7 | 99.7 | 69.6 | 94.7 |
| | Polypropylene resin 2 | Parts by mass | - | - | - | - | - |
| | Raw material (A1) | Parts by mass | - | - | - | 30.0 | - |
| | Raw material (A2) | Parts by mass | - | - | - | - | - |
| | Raw material (A3) | Parts by mass | 60.0 | - | - | - | 5.0 |
| | Raw material (A4) | Parts by mass | - | 20.0 | - | - | - |
| | Antioxidant | Parts by mass | 0.3 | 0.3 | 0.3 | 0.3 | 0.3 |
| | Content of polymer having cyclic structure in side chain | mass% | 0 | 0 | 0 | 12 | 0 |
| Surface layer formulation | Polypropylene resin 2 | Parts by mass | | | | | |
| | Antioxidant | Parts by mass | | | | | |
| Membrane formation condition | Extruder temperature | °C | 260 | 260 | 260 | 260 | 255 |
| | Casting drum temperature | °C | 90 | 90 | 30 | 30 | 90 |
| | Longitudinal stretching ratio | Times | 4.7 | 3.6 | 5.5 | | 5.9 |
| | Longitudinal stretching temperature | °C | 147 | 185 | 143 | | 148 |
| | Stretching ratio in width direction | Times | 8.8 | 8.2 | 8.3 | | 8.8 |
| | Area stretching ratio | Times | 41 | 30 | 46 | | 52 |
| | Preheating temperature in width direction | °C | 175 | 185 | 165 | - | 170 |
| | Stretching temperature in width direction | °C | 175 | 185 | 165 | | 170 |
| | Heat treatment temperature | °C | 163 | 164 | 153 | | 160 |
| | Relaxation treatment | % | 10 | 10 | 12 | | 12 |
| Film characteristics | Film thickness | μm | 5.5 | - | 3.0 | 30.0 | 3.1 |
| | Storage Elastic Modulus E' in Main Orientation Axis Direction at 145°C | × $10^8$Pa | 1.1 | - | 0.08 | 0.30 | 0.1 |
| | Internal Haze | % | 3.5 | - | 0.2 | 1.5 | 0.1 |
| | Thermal Shrinkage Rate in Main Orientation Axis Direction at 135°C | % | 2.8 | - | 5.1 | -0.1 | 5.8 |
| | Length of domain in thickness direction | μm | 0.10 | - | - | 1.2 | 0.05 |
| | Evaluation of film low voltage breakdown | - | D | - | D | D | D |
| | Evaluation of dimensional stability | - | B | - | C | A | C |
| | Evaluation of lifespan | - | C | - | D | C | D |
| | Evaluation of stability and stretchability during molding | - | C | - | C | C | C |

It is to be noted that the polypropylene films described in Examples 1 to 14 and Comparative Examples 1 and 3 to 5 did not have air permeability to such an extent that the permeation time of 100 ml of air measured at a temperature of 23°C and a relative humidity of 65% by a B-type Gurley tester of JIS P 8117(1998) was 5,000 seconds/100 ml or less, and therefore were determined not to correspond to a microporous film. In addition, the mesopentad fraction of the film was the same as the value of the polypropylene resin as a main component.

INDUSTRIAL APPLICABILITY

The biaxially oriented polypropylene film of the present invention can be widely used in industrial applications such as film capacitor applications, packaging applications, release applications, and tape applications. In particular, since it is excellent in withstand voltage characteristics and reliability in a high-temperature environment, it can be suitably used for a film capacitor used under high temperature and high voltage.

## Claims

1. A biaxially oriented polypropylene film containing a resin A having an alicyclic structure in a side chain.

2. The biaxially oriented polypropylene film according to claim 1, comprising at least one layer containing both a polypropylene resin and the resin A.

3. The biaxially oriented polypropylene film according to claim 1 or 2, wherein a storage elastic modulus E' in a main orientation axis direction at 145°C is $1.0 \times 10^8$ Pa or more and $1.0 \times 10^{13}$ Pa or less.

4. The biaxially oriented polypropylene film according to any one of claims 1 to 3, wherein the resin A is an amorphous resin.

5. The biaxially oriented polypropylene film according to any one of claims 1 to 4, wherein an internal haze is 0.0% or more and 5.0% or less.

6. The biaxially oriented polypropylene film according to any one of claims 1 to 5, wherein a glass transition temperature of at least one of the resin A is 120°C or more and 160°C or less.

7. The biaxially oriented polypropylene film according to any one of claims 1 to 6, wherein a content of the resin A is 0.2 mass% or more and 45 mass% or less based on 100 mass% of the entire biaxially stretched polypropylene film.

8. The biaxially oriented polypropylene film according to any one of claims 1 to 6, wherein a content of the resin A is 0.5 mass% or more and 45 mass% or less based on 100 mass% of the entire biaxially stretched polypropylene film.

9. The biaxially oriented polypropylene film according to any one of claims 1 to 6, wherein a content of the resin A is 1.2 mass% or more and less than 3.0 mass% based on 100 mass% of the entire biaxially stretched polypropylene film.

10. The biaxially oriented polypropylene film according to any one of claims 1 to 9, wherein a thickness is 0.50 μm or more and 60 μm or less.

11. The biaxially oriented polypropylene film according to any one of claims 1 to 10, wherein a thermal shrinkage rate in the main orientation axis direction at 135°C is -10% or more and 5.0% or less.

12. The biaxially oriented polypropylene film according to any one of claims 1 to 11, wherein a length of a domain in a thickness direction in a cross section in the main orientation axis direction-thickness direction is 0.0010 μm or more and 1.0 μm or less.

13. The biaxially oriented polypropylene film according to any one of claims 1 to 12, containing two or more types of the resin A.

14. The biaxially oriented polypropylene film according to any one of claims 1 to 13, comprising a copolymer having at least one of an ethylene residue and an α-olefin residue, and a vinylcyclohexane residue.

15. The biaxially oriented polypropylene film according to any one of claims 1 to 14, wherein a mesopentad fraction of the film is 0.973 or more.

16. The biaxially oriented polypropylene film according to any one of claims 1 to 15, used as a dielectric of a film capacitor.

17. A metal membrane laminate film comprising a metal membrane on at least one surface of the biaxially oriented polypropylene film according to any one of claims 1 to 16.

18. A film capacitor using the metal membrane laminate film according to claim 17.

19. A power control unit comprising the film capacitor according to claim 18.

20. An electric vehicle comprising the power control unit according to claim 19.

21. An electric aircraft comprising the power control unit according to claim 19.

**INTERNATIONAL SEARCH REPORT**

International application No.
**PCT/JP2024/032821**

**A. CLASSIFICATION OF SUBJECT MATTER**

***C08J 5/18***(2006.01)i; ***B32B 15/08***(2006.01)i; ***B32B 15/085***(2006.01)i; ***C08L 23/12***(2006.01)i; ***C08L 53/00***(2006.01)i; ***H01G 4/18***(2006.01)i; ***H01G 4/32***(2006.01)i
FI: C08J5/18 CES; H01G4/18; H01G4/32 511L; B32B15/085; B32B15/08 E; H01G4/32 511D; H01G4/32 511A; C08L23/12; C08L53/00

According to International Patent Classification (IPC) or to both national classification and IPC

**B. FIELDS SEARCHED**

Minimum documentation searched (classification system followed by classification symbols)

C08J5/18; B32B15/08; B32B15/085; C08L23/12; C08L53/00; H01G4/18; H01G4/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 62-122009 A (SUMITOMO CHEMICAL CO., LTD.) 03 June 1987 (1987-06-03) claims, p. 1, lower right column, lines 1-2, examples | 1-8, 10-21<br>15-21 |
| X<br>Y | JP 2022-514249 A (BOREALIS AG) 10 February 2022 (2022-02-10) claims, paragraphs [0071]-[0100], examples | 1-8, 10-21<br>15-21 |
| X<br>Y | JP 2-135245 A (SUMITOMO CHEMICAL CO., LTD.) 24 May 1990 (1990-05-24) claims, p. 2, lower right column, lines 2-12, examples | 1-14<br>15-21 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/032821**

| Patent document cited in search report | Publication date (day/month/year) | Patent family member(s) | Publication date (day/month/year) |
|---|---|---|---|
| JP 62-122009 A | 03 June 1987 | EP 227300 A2<br>claims, p. 1, lines 13-15, examples | |
| JP 2022-514249 A | 10 February 2022 | US 2022/0033631 A1<br>claims, paragraphs [0078]-[0118], examples | |
| JP 2-135245 A | 24 May 1990 | US 5115027 A<br>claims, column 2, lines 27-40, examples | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015012076 A
- WO 2017022706 A
- JP 2018034510 A
- WO 2020521867 A
- JP 6592192 B
- JP 2075499 A

### Non-patent literature cited in the description

- Film Capacitor Breakthrough, from Car to Energy. **MOTONOBU KAWAI**. NIKKEI ELECTRONICS. Nikkei Business Publications, Inc., 17 September 2012, 57-62
- *Macromolecules*, 2006, vol. 39, 2832-2840